# EUROPEAN PATENT SPECIFICATION

(11) **EP 4 115 259 B1**
(45) Date of publication and mention of the grant of the patent: **13.12.2023**
(21) Application number: 21708683.4
(22) Date of filing: 04.03.2021
(51) Int. Cl.: F04C 28/06, F04C 28/08, F04C 28/24, F04C 28/28, G05D 16/20, F04B 41/06, F04C 23/00, F04C 28/02

(54) **METHOD AND SYSTEM FOR CONTROLLING A PLURALITY OF COMPRESSORS COUPLED TO A COMPRESSED-AIR INSTALLATION**
VERFAHREN UND SYSTEM ZUR STEUERUNG EINER VIELZAHL VON AN EINE DRUCKLUFTANLAGE GEKOPPELTEN VERDICHTERN
PROCÉDÉ ET SYSTÈME DE COMMANDE D'UNE PLURALITÉ DE COMPRESSEURS COUPLÉS À UNE INSTALLATION À AIR COMPRIMÉ

(30) Priority: 04.03.2020 NL 2025046
(43) Date of publication of application: 11.01.2023
(73) Proprietor: P.L.M. Valentin Beheer B.V., 2675 BR Honselersdijk (NL); Valentin, Petrus Leonardus Maria, 2675 BR Honselersdijk (NL)
(72) Inventor: VALENTIN, Petrus Leonardus Maria, 2675 BR Honselersdijk (NL)
(74) Representative: EP&C
(86) International application number: PCT/EP2021/055491
(87) International publication number: WO 2021/176004

(56) References cited:
- US-A- 4 502 842
- US-A1- 2003 039 550
- US-A1- 2006 257 265
- US-A1- 2018 185 780

## Description

The invention relates to a method and system for controlling multiple compressors coupled to a compressed-air installation. The invention further relates to use of the system for performing the method.

### Background of the invention

Worldwide, compressed-air installations are used for the provision of a gas for various applications, e.g. in the horticulture, utilities, manufacturing industry, logistics, and in the petrochemical industry. With larger compressed-air installations, multiple compressors are usually coupled with their outlets to the same compressed-air installation. In this respect, the compressors are controlled on the basis of a differentially set switch-on and switch-off pressure.

When switching a compressor on or off according to this method, large fluctuations can occur in the pressure in the compressed-air installation, and as a result, a predefined target pressure needs to be maintained that is relatively large compared to a required minimum pressure for the compressed-air installation.

For an owner of such a compressed-air installation it is moreover an advantage to keep the energy consumed by the compressors as low as possible. It is therefore a known fact to select the fixed switching on and off sequence in such manner that each time a compressor with the lowest possible power is switched on whereby sufficient inflow can still be supplied.

EP1629199B1 discloses a method for controlling a compressed-air installation comprising several compressors, which minimises a pressure difference compared to a predefined target pressure. In the method, an evaluation table with evaluation scores is determined for control orders for controlling the compressors on the basis of compressor characteristics. On a periodic or on a continuous basis, all control commands that reduce the pressure difference are compared, after which the respective control command with the highest evaluation score is implemented.

In this method, compressors of one, two or three different types can be combined.

However, it has become apparent that in this method, in case of a sudden change in compressed-air demand, fluctuations in the compressed-air pressure can still occur.

By minimising the pressure difference with the target pressure according to the known method, compressors are repeatedly switched on or switched off, when that would result in a higher evaluation score. However, when switching on or switching off a compressor, the compressor does consume energy. As a consequence, the eventual energy consumption can be higher than envisaged on the basis of the evaluation scores. In addition, the regular switching on and switching off of compressors results in additional wear and tear.

US2003039550A1 discloses a method for controlling multiple throttled inlet rotary screw compressors using both the actual system pressure and volumetric flow rate. Specifically, a throttled inlet rotary screw compressor is loaded or unloaded from the compressor system after sensing the actual system pressure and calculating the system's actual volumetric flow rate. Then, compressors are controlled when a pressure and flow bandwidth are exceeded. Control is performed based on a fixed compressor sequence.

In US4502842A, a multiple compressor controller and method is disclosed in which a pressure variation is measured by using the system compressors in a calibration mode and monitoring the effect of each compressor on the system. Once such data is obtained and stored, the compressors are controlled according to a plurality of system operating pressures pre-set into a time clock.

US20180185780A1 discloses an apparatus and a method for compressing and drying a gas and for delivering dried gas at a high pressure. A known drying method is disclosed, comprising absorbing water vapour of a compressed gas on a desiccant, followed by replacing or regenerating the desiccant, for example using Thermal Swing adsorption or Pressure Swing Adsorption.

### Objective of the invention

It is an object of the invention to at least partially eliminate the aforementioned disadvantages or to provide a usable alternative. Moreover, it is an object of the invention to provide the compressed-air installation with a desired inflow with the lowest possible energy consumption, wherein the target pressure can be reduced further and/or wherein even more types of compressors can be combined.

### Summary of the invention

The invention provides a method for controlling a plurality of compressors coupled to a compressed-air installation according to claim 1.

The method provides a main controller to obtain capacity data of the compressors and to obtain a minimum pressure for the compressed-air installation. The obtaining, as used herein, can take place by configuration in the main controller, e.g. manually and/or by means of programming, and/or by communication to the main controller, e.g. when the minimum pressure and/or the capacity data are transmitted by an external device or an identical controller to the main controller.

Additionally, the capacity data may initially be obtained by programming in the main controller for example on the basis of factory values or experimental determination, and may subsequently be obtained during operation of the compressed-air installation, by periodic or continuous adjustment of those initially obtained capacity data on the basis of real-time measured pressure values and real-time measured outflow rates.

The capacity data of the compressors that are obtained in the main controller are, for instance, the ISO values of the respective compressor specified by the manufacturer, possible rotation speeds, possible pressures at a certain rotation speed, the inflow rates that flow into the compressed-air installation at the possible pressures in case of a free compressed-air release, and/or the respective powers consumed by the compressor. Thus, the capacity data represent the characteristics of the compressor, such as a pressure-flow characteristic and/or a power characteristic, and are representative for a pneumatic capacity of the compressors.

In particular, the capacity data comprise, the possible inflow rates into the compressed air installation that each of the compressors is able to deliver, at possible pressures at which the respective compressor is able to deliver the respective possible inflow rate, for the operating conditions at which the compressor is able to deliver the respective possible inflow rate at the respective possible pressure, and the power consumed at the respective operating conditions, inflow rates and pressures. The operating conditions may comprise at least one normal operation mode and one free-running or neutral operation mode for each of the compressors, such that a power consumption for each of the compressors can be obtained for normal operation and free-running operation.

In a free-running mode, a compressor is operating at a rotation speed at a relatively low load as no or a limited amount of compressed-air pressure is built up, for example due to an open free-running valve in the respective compressor.

For a variable speed compressor, the capacity data may comprise respective possible inflow rates, possible pressures and consumed powers at all possible rotation speeds of the respective compressor. Alternatively, the capacity data comprises data for at least two rotation speeds of the respective compressor, wherein the respective data at other rotation speeds are obtained in the main controller by computing on the basis of the data for the at least two rotation speeds, such as via interpolation. Preferably the capacity data comprises data for more than two rotation speeds to enable a more precise computation, in particular as power consumption of a compressor characteristics may be non-linear.

In the method according to the invention, the main controller transmits a control signal to at least one of the compressors. The control signal according to the invention is an electric signal, e.g. a pulse signal or a continuous signal, for instance an output voltage or frequency. The control signal can comprise one signal for one compressor or a combination of signals for one or a plurality of compressors.

On the basis of the capacity data, the control signal can be adjusted to the type and the capacities of a respective compressor, and can, for instance, contain an on/off, speed, free-running or open/close instruction.

After receipt of the control signal by the at least one compressor, the control signal can be processed by the respective compressor, for instance by switching on or off, switching to a different rotation speed, or by opening or closing a valve for a free-running configuration of a respective compressor.

Thereby, both a pressure value of the compressed-air installation and an outflow rate of the compressed-air installation are measured, so that the control signal to be transmitted can be selected on the basis of the measured pressure value, capacity data of the compressors, and the measured outflow rate.

With this selection the compressors can comprise any possible combination of power and type, e.g. on / off, variable speed or double acting.

By directly measuring both the pressure value and the outflow rate, an inflow rate to be supplied to the compressed-air installation can be determined more accurately, compared to e.g. a controller known in the art, so that the pressure in the compressed-air installation can be controlled significantly faster, more consistently, and more accurately.

By determining an actual flow rate to be supplied, is may be possible to take expected future conditions of the compressed-air installation into account by switching between normal operation and free-running operation of the compressors, such that less starts/stops of the compressors are performed.

In this respect, on the basis of the measured outflow rate and the measured pressure value, an inflow rate to be supplied can be determined by the main controller.

The inflow rate to be supplied into the compressed air installation is determined making use of both the measured outflow rate and the difference between the measured pressure value and the obtained minimum pressure. In particular, the difference between the measured pressure value and the obtained minimum pressure may first be multiplied with a pressure-outflow rate correlation factor and then be added to the measured outflow rate according to Q_{tobesupplied} = Q_{measured} + c * (pₘᵢₙ - p_{measured}). Herein, Q_{tobesupplied} is the determined compressed-air inflow rate to be supplied into the compressed-air installation (e.g. in m³/min), Q_{measured} is the outflow rate measured with the flow is the correlation factor and may, for example, amount 1, pₘₑₐₛ is the measured pressure value (e.g. bar) and pₘᵢₙ is the minimum pressure for the compressed air installation (e.g. bar).

As the measured pressure value may be representative for a compressed-air buffer capacity of buffer tanks and/or conduits in the compressed-air network, the main controller may react relatively fast to a rising and/or declining flow, also when the flow sensor is not placed directly nearby a compressed-air user.

In this respect, if desired, even the buffer capacity of conduits in the compressed-air network can be used, so that one or a plurality of virtual pressure vessels are created, and a smaller physical pressure vessel can be used in the compressed-air installation and/or fluctuations in the compressed-air pressure can be reduced. In particular in relatively large compressed air networks, such as at an industrial site at which for example conduit lengths of over 500 m may be present, the buffer capacity of the conduits can be significant. By taking into account the buffer capacity represented in the measured pressure value when determining an inflow rate to be supplied, the buffer capacity of the conduits can be actively be used in compressor control as a buffer for differences between inflow rate and outflow rate of the compressed air installation.

As a consequence of the precisely determined inflow rate to be supplied, a pressure in the compressed-air installation can be maintained that is closer to the required minimum or desired pressure for the compressed-air installation, so that the energy consumption is reduced compared to a conventional compressor control on the basis of flow rate and/or pressure threshold values.

Furthermore, due to the combined pressure and flow measurement according to the invention a plurality of types of compressors, also more than three, and/or compressors at various locations within the compressed-air network may be combined advantageously.

In this respect it is, in the method according to the invention, possible to take into account combinations of increases and/or decreases of both the measured pressure value and the measured outflow rate, such that future pressures and outflow rates can be predicted and adjusted better. Additionally, as a result, the number of on/off switches of the compressors may be reduced.

Moreover, by measuring the pressure value and outflow rate, it is possible to consistently select a most economical combination of compressors, also if only a minor fluctuation of the pressure value or the outflow rate is measured, for instance if barely any outflow is measured whilst the pressure value of the compressed-air installation does measurably decline, or if an increase or if barely any decrease of the pressure value is measured while the flow does clearly fluctuate.

Initial assessment scores do not always turn out to represent the actual compressor characteristics, as the actual compressor characteristics may differ, for instance due to individual differences in the compressors, the condition of the connected power grid or the influence of the compressed-air installation, such as the location where the compressor is coupled to the compressed-air installation. Further, it has become apparent that the actual compressor characteristics can change in time.

Because the pressure value and the outflow rate of the compressed-air installation are both measured in the invention, the initially obtained capacity data can, if so required, be adjusted on the basis of the measured pressure value and the outflow rate during operation of the compressed-air installation. As a result, ever more accurate capacity data can be obtained for the specific compressed-air installation, in particular capacity data that are better in line with compressor characteristics that change in time.

The capacity data may deviate from data from the manufacturer due to changing compressor characteristics, e.g. due to wear or usage of the respective compressor. As the capacity data may advantageously be adjusted during operation of the compressed-air installation, the capacity data may be adjusted continuously or regularly. In particular, the capacity data may advantageously also be adjusted upon the initial setup or startup of the compressed-air installation. In particular, possible pressures at a certain rotation speed may be adjusted with the measured pressure value and the inflow rate of the compressed-air installation for the respective pressures in case of a free compressed-air release may be adjusted with the measured outflow rate.

The advantageous combination of active use of the buffer capacity of the compressed-air installation and selection of control signals based on initially obtained and/or adjusted compressor characteristics due to the combined pressure and outflow measurement results in compressor control with fewer switching of compressors, less wear and an increased energy efficiency.

In an embodiment, the initially obtained capacity data in the main controller are adjusted on the basis of the measured pressure value and the measured outflow rate during operation of the compressed-air installation, wherein the step of the transmitting an electric control signal with the main controller to at least one of the compressors to supply the determined compressed-air inflow rate takes place in dependence on the pressure difference between the measured pressure value and the obtained minimum pressure for the compressed-air installation, the adjusted capacity data of the compressors, and the measured outflow rate.

In an embodiment, the following steps take place before the step of the transmitting an electric control signal with the main controller to at least one of the compressors:
determining possible inflow rates to be supplied by the compressors individually or in combination, on the basis of the capacity data of the compressors, wherein the main controller determines a required electric control signal and an efficiency factor of the compressors for each of the determined possible inflow rates to be supplied by the compressors individually or in combination; and
selecting one of the determined possible inflow rates to be supplied by the compressors individually or in combination in order to transmit the required electric control signal required for it to at least one of the compressors to supply the selected inflow rate, in dependence on the determined inflow rate to be supplied determined on the basis of the measured outflow rate of the compressed-air installation and the pressure difference between the measured pressure value and the obtained minimum pressure for the compressed-air installation, and the determined efficiency factors for each of the determined possible inflow rates to be supplied by the compressors individually or in combination.

The embodiment comprises the determination of possible inflow rates to be supplied, for instance through interpolation of the initially obtained and/or adjusted capacity data, such as the inflow rates at a free compressed-air release and the respective pressure values, for example for all possible rotation speeds for each of the compressors.

In this respect, inflow rates through combinations of all or a part of the compressors may also be determined, for all possible rotation speeds and operating conditions, including a partial load, zero load, on, off or deactivated status of the respective compressors.

In particular, possible inflow rates to be supplied may be any combination of the possible inflow rates for each of the compressors, alone or in combination at a corresponding pressure.

For each of the possible inflow rates to be supplied, individually or in combination, an efficiency factor is determined, e.g. through interpolation of powers consumed by the compressors from the initially obtained or adjusted capacity data, or through a calculation on the basis of previously obtained or measured values.

The efficiency factor for a compressor represents an energy efficiency of a compressor. The efficiency factor for a possible inflow rate can, for example be determined by calculating a first time percentage in which the respective compressors are expected to run in normal operation mode and a second time percentage in which the respective compressors are expected to run in free-running or neutral operation mode in order to supply the respective possible inflow rate, alone or in combination.

Then, by multiplying, for each of the respective compressors, the first time percentage with the power consumption for normal operation and the second time percentage with the power consumption for free-running operation, a power consumption can be determined for each of the respective compressors. The power consumptions of each of the respective compressors can be combined, for example by summation, to determine a combined power consumption for the combination of compressors to supply the respective possible inflow rate.

The determined combined power consumption at a specific possible inflow rate and possible pressure may form the determined efficiency factor, such that a high efficiency factor represents a low efficiency. Alternatively, a reciprocal of the combined power consumption may for the efficiency factor, or the determined combined power consumption may be divided by the respective possible inflow rate to form the efficiency factor, such that a high efficiency factor represents a high efficiency, or vice versa, such that a low efficiency factor represents a high efficiency.

A maximal efficiency factor, as used herein, is intended to refer to the efficient situation, thus wherein a high efficiency factor represents a high efficiency.

In additional or alternative embodiments, a product of a respective possible pressure and a respective possible inflow rate is divided by the determined combined power consumption, or vice versa, to determine the efficiency factor.

Initially, the possible inflow rates and possible pressures may be the inflow rates into the compressed-air installation and the possible pressures in the initially obtained capacity data. Later, when adjusting capacity data of the compressors, the possible inflow rates may be adjusted with the measured pressure value and the measured outflow rate and/or by an inflow rate measured with an additional flow sensor.

As such, efficiency factors can be determined for each of the possible inflow rates of the compressed air installation at possible pressures for all possible rotation speeds of the compressors, individually or in combination.

During the step of selecting one of the possible inflow rates according to the embodiment, an actual inflow rate to be supplied may be determined, on the basis of the measured outflow rate and the measured pressure value. Then one of the possible inflow rates to be supplied can be selected depending on the actual inflow rate to be supplied and the determined efficiency factors.

Therefore, during operation of the compressed-air installation a precise selection may be made, continuously or regularly, from the possible compressors and their rotation speeds and operating conditions, on the basis of an actual inflow rate to be supplied and the initially obtained and/or adjusted capacity data of the compressors. This way, it may be possible to, for instance, realise operation of variable speed compressors within a so-called "most energetic bandwidth".

Advantageously, one of the possible inflow rates to be supplied is selected that is equal to, or slightly larger than the determined inflow rate to be supplied, and wherein the determined efficiency factor is maximal.

In particular, the required electric control signal is transmitted once or periodically, such that, during continued operation, the compressors run in normal operation during the first time percentage and in free-running operation during the second time percentage.

As such, the plurality of compressors is advantageously controlled by switching between free-running operation and normal operation, such that the compressors may keep rotating, and such that the number of starts/stops of the compressors may be reduced compared to conventional compressor control.

In particular, the compressors may be controlled such that on-off switching is limited, for example avoided, as long as the determined inflow rate to be supplied remains relatively constant.

In an embodiment the method further comprises the step of obtaining, in the main controller, a maximum flow rate deviation, wherein, during the step of the selection of one of the possible inflow rates to be supplied by the compressors individually or in combination, that inflow rate to be supplied is selected for which a difference with the measured outflow rate of the compressed-air installation is smaller than the obtained maximum flow rate deviation and for which the determined efficiency factor is maximal.

The flow deviation between a flow rate supplied by the compressors and the outflow rate may occur momentarily at a moment in time. The maximum flow rate deviation is may, for example, be determined on a buffer capacity of the buffer tank.

In particular, an inflow rate to be supplied may be selected for which a difference with the determined inflow rate too be supplied is smaller than the obtained maximum flow rate deviation

Surprisingly, it has become apparent that a compressed-air installation does not always need to be configured in such manner that the difference between a supplied inflow rate and an outflow rate of the compressed-air installation becomes as small as possible, as said difference does not need to pose a problem, due to the fact that the pressure value and the outflow according to the invention are both monitored. By permitting the flow rate difference, which should be smaller than the maximum flow rate deviation in this embodiment of the invention, inflow rates to be supplied with a higher efficiency factor can be selected and the number of on/off switches may be limited. As a result, an additional energy saving can be accomplished.

In an embodiment, the capacity data of the compressors comprise the possible rotation speeds for the respective compressors and the prohibited rotation speeds for the respective compressors. Such prohibited rotation speeds can, for instance, be rotation speeds at which certain undesired resonances can occur in or at the respective compressor, as a result of which damages may be inflicted on a compressor. By configuring a prohibited rotation speed, the respective configured prohibited rotation speed can be avoided, for example by the main controller removing the configured prohibited rotation speeds from the possible rotation speeds.

In an embodiment, the compressed-air installation comprises a buffer tank. The buffer tank may be a compressed-air buffer tank that is fluid tight and fluidly connected to other components in the compressed air installation, such that the measured pressure value is representative for a compressed-air pressure in the buffer tank, and the outflow openings, such that the measured outflow rate of the compressed air installation is representative for the outflow that causes the decrease of the measured pressure value in the buffer tank. The buffer tank may have a volume of 100-2000L, such as 500-1000L.

The pressure value may be representative for a pressure in the compressed-air buffer, such that, by having a buffer tank, the compressed-air network has a large buffer capacity with which, by measuring the pressure value and the outflow rate, fluctuations in the difference between the supplied flow rate and the outflow rate can be dampened, which can result in very little pressure variation, of for example less than 0,05 bar.

This way, the difference between the inflow rate of the compressed-air installation and the outflow rate of the compressed-air installation may be relatively large, such that more efficient control can be performed.

Advantageously, the compressed-air buffer may be monitored with the combined measurement of pressure value and outflow rate, on the basis of which an inflow to be supplied can be determined. As such, a control signal can be transmitted that increases the difference between the supplied inflow rate and the outflow rate temporarily, in order to maximise economic operation, e.g. to maximise efficiency and/or minimise wear of the compressors.

In an embodiment the method further comprises the steps of:
providing, for each of the compressors, a power sensor, configured to determine actual power consumption of the respective compressor;
determining, with the power sensors, the actual power consumptions of the respective compressors;
updating the determined efficiency factors of the respective compressors at the respective inflow rate and the measured pressure value, in dependence on the determined actual power consumption of the respective compressors.

The provided power sensor can comprise one sensor that measures the electrical or mechanical power consumed by a compressor. In addition or alternatively, the power sensor can also comprise a plurality of sensors, e.g. sensors for the voltage, current and phase shift on an electrical connection of a compressor. The actually consumed power may then be determined before, during or after receipt of a control signal by the respective compressor. By measuring the phase shift, it is also possible to take reactive power into account.

As actually consumed power is measured in this embodiment, the power consumptions of the compressors from the capacity data can be corrected during the operation of the compressed-air installation therewith.

In this embodiment, the capacity data further comprise power consumed by each of the compressors. Consumed power of a compressor may vary with pressure and flow. Due to the advantageous measurement of pressure value, consumed power and outflow rate, the consumed powers in the capacity data may be adjusted to represent actual compressor performance at the measured pressure value and the measured outflow rate. More specifically, whether in normal operation or free-running operation of a respective compressor, the consumed powers may be adjusted at the measured pressure value and at the measured outflow rate during operation of the compressed-air installation.

This way, actual efficiency factors may be determined, that are based on actual compressor performance rather than initial data from the manufacturer.

In addition, the determined efficiency factors can be updated, so that they are more precise and take individual differences in the compressors, the condition of the connected power grid or the influence of the compressed-air installation, such as the location on which the compressor is coupled to the compressed-air installation, into account. This way it can also be accomplished that the efficiency factors are adjusted during ageing of the compressor, so that the efficiency factors correspond with the reality and power can be saved.

In an embodiment, the method comprises the step of detecting an increase or decrease of the measured pressure value of the compressed-air installation and/or the measured outflow rate of the compressed-air installation during a predetermined period. This can, for instance, be accomplished through the determination of an average or a derivative of the measured pressure value or the measured outflow rate.

The predetermined period may for example be a rest period upon transmission of a control signal before a next control signal can be transmitted. The predetermined period is, for example, more than 5 s, such as 180 s. A longer predetermined period may lead to less switching of the compressors and thus to less wear.

The predetermined period may be inversely proportional to deviation between the measured outflow rate and the flow supplied by the compressors. This way, at a larger deviation, an increase or decrease of the measure pressure value and/or the measured outflow rate is determined faster, and control signals may be transmitted faster after each other compared to a stable situation wherein the supplied flow rate approaches the outflow rate. Additionally or alternatively, the predetermined period may be inversely proportional to the pressure difference between the measured pressure value and the minimum pressure for the compressed air installation.

With this embodiment, during operation of the compressed-air installation, a precise selection can be made, continuously or regularly, from the possible compressors, on the basis of an expected actual inflow rate to be supplied. As a result, the actual flow rate to be supplied after the electric control signal transmitted by the main controller may be better in line with a future actual outflow and/or energy can be saved.

In a further embodiment, the method further comprises the steps of obtaining start-up times of the compressors, determining an increase or decrease of the outflow rate of the compressed-air installation during the predetermined period, computing, in the event of a decrease of the measured pressure value, an expected time to reach the obtained minimum pressure for the compressed-air installation with the increase or decrease of the outflow rate of the compressed-air installation, wherein the step transmitting an electric control signal with the main controller to at least one of the compressors is carried out before the computed expected time reaches a value that is smaller than the obtained start-up time of the respective at least one of the compressors.

This way, a trend in the outflow rate may be determined and, to avoiding a violation of a maximum flow rate deviation, minimum and/or maximum pressure and, a control signal can be transmitted in due time, taking into account the start-up time, which lasts during a switching-on condition of a compressor, from the receipt of a switch-on signal by a compressor until the respective compressor is in a condition envisaged with the control signal. In a comparable manner, a switching-off condition of the compressors can be taken into account, such that the maximum flow rate deviation or minimum pressure during this condition is not violated.

In an embodiment where a maximum flow rate deviation has been configured, the method may further comprise the steps of:
in the event of a detected increase of the measured pressure value and a determined increase of the outflow rate of the compressed-air installation during the predetermined period, only transmitting an electric control signal to at least one of the compressors with the main controller when a difference between the inflow rate to be supplied by the compressors individually or in combination and the measured outflow rate of the compressed-air installation during a predetermined period exceeds the obtained maximum flow rate deviation, and, in the event of a detected decrease of the measured pressure value and a determined decrease of the outflow rate of the compressed-air installation during the predetermined period, only transmitting an electric control signal to at least one of the compressors with the main controller when a difference between the inflow rate to be supplied by the compressors individually or in combination and the measured outflow rate of the compressed-air installation during a predetermined period exceeds the obtained maximum flow rate deviation.

According to this embodiment of the method, despite an increase or decrease of the pressure, transmitting the control signal, for instance for switching on or off or for adjusting of a rotation speed of at least one of the compressors, is delayed until a difference between the inflow and the measured outflow rate of the compressed-air installation during a predetermined period exceeds the configured maximum flow rate deviation.

In the event when the configured maximum flow rate deviation is exceeded, an expected exceeding duration may be determined, for instance on the basis of the measured pressure value and the measured outflow rate of the compressed-air installation, wherein the main controller delays transmitting an electric control signal for correction of the inflow rate into the compressed-air installation if the expected exceeding duration is shorter than the predetermined period.

As a consequence, an expected future decrease or increase of the pressure value of the compressed-air installation as a result of the increasing respectively decreasing outflow can be anticipated. This way, frequent switching on and off of the compressors is avoided, so that energy can be saved.

In an embodiment the method further comprises the steps of:
providing identical controllers for each of the compressors for controlling the respective compressors;
connecting each of the sensors to one or multiple of the identical controllers,
designating one of the identical controllers as the main controller, wherein the main controller transmits the electric control signals to the other controllers, and wherein the other controllers transmit status information about the respective controlled compressors to the main controller.

Through the provision of identical controllers on each of the compressors, the compressors can easily be configured according to the method. In this respect, the exchange of status information and control signals to the main controller takes place in a uniform manner, so that a controller can easily be added to or removed from the compressed-air installation. This way, an added identical controller may automatically be detected by the main controller by transmitting status information.

Because the controllers are identical, pressure and flow sensors can be connected to each of the identical controllers. As a result, more pressure and flow sensors can be connected than the number of connections on one main controller. This way, the pressure and flow sensors may also be connected faster, without them having to be connected directly to the main controller. Moreover, it becomes possible to connect the pressure and flow sensors to a different identical controller, for instance in case of maintenance or replacement of an identical controller or a respective compressor. This way, this embodiment enhances installation and maintenance convenience during application of the method and the system.

Designating the main controller can, for instance, take place automatically, so that, if signals cannot be transmitted to the main controller, one of the other identical controllers is designated as main controller, which increases the operational reliability of the compressed-air installation in this embodiment.

If a further enhancement of the operational reliability of the compressed-air installation is desired, an identical controller could be connected to a respective compressor through interruption of a connection between a factory controller installed on a compressor and the compressor, whereby the respective identical controller is configured to automatically restore the respective connection if an error occurs in the identical controller, so that the available factory controller can control the compressor during the error. This way, redundant control with additional operational reliability is obtained.

In a further embodiment, the method further comprises the steps of:
providing at least one cooling and/or drying system in the compressed-air installation and an identical controller for the at least one cooling and/or drying system for controlling the respective cooling and/or drying system; and
transmitting, with the main controller, an electric control signal to at least one of the at least one cooling and/or drying system, in order to cool and/or dry an inflow rate of compressed-air into the compressed-air installation with the respective cooling and/or drying system.

In a further or alternative embodiment the method comprises the steps of:
providing at least one nitrogen generator, such as a pressure swing absorber, in the compressed-air installation and identical controllers for the at least one nitrogen generator for controlling the respective nitrogen generator;
transmitting, with the main controller, an electric control signal to at least one of the at least one nitrogen generator, in order to, with the respective nitrogen generator, generate an outflow rate of the compressed-air installation of nitrogen, for example using pressure swing absorption.

In the abovementioned embodiments of the method it becomes possible to control a plurality of types of components, e.g. compressors, cooling and/or drying systems or oxygen and/or nitrogen generators, which are connected to or are part of a compressed-air installation. Because all components are provided with the same identical controller, the installation convenience is enhanced.

For example, in case of a failure of cooling and/or drying systems or oxygen and/or nitrogen generators, a supplied flow rate from compressors may be reduced to avoid further damage to the compressed air installation.

As a result the operation of the various components can be coordinated, so that all compressors and components in and on the compressed-air installation can be controlled fast and precisely, where all measured pressure values and outflow rates can be transmitted between the identical controllers.

Moreover, in these embodiments the measured pressure value and the measured outflow rate in case of a first type of component, e.g. a nitrogen generator, can form a basis for a control signal to a second type of component, e.g. a compressor. Furthermore, this way, with one control signal, both the production of a nitrogen generator and the inflow rate to be supplied by a compressor can be adjusted.

In a further or alternative embodiment the method further comprises the step of:
providing a humidity sensor;
measuring, with the humidity sensor, a humidity value of the compressed-air installation, e.g. by means of a dew point measurement,
wherein the step of the transmitting an electric control signal with the main controller to at least one of the at least one nitrogen generator and/or the step of the transmitting an electric control signal with the main controller to at least one of the at least one cooling or drying installation takes place in further dependence on the humidity value measured with the humidity sensor,

This way, a humidity value of the compressed-air installation can be determined easily, so that controlling the cooling or drying installation and/or the nitrogen generator can take place on the basis of pressure, flow, and measured humidity. The respective cooling or drying installation and/or nitrogen generator can now be controlled on the basis of the humidity value to be operated on partial load, as a result of which the number of switches on and off is limited and a further saving of energy is accomplished.

In an embodiment the method further comprises the steps of:
providing at least one additional inflow or outflow opening as through which an inflow rate of the compressed-air installation or the compressed-air outflow rate can flow into, respectively out of, the compressed-air installation and additional flow sensors at each of the at least one additional inflow or outflow opening and
measuring, with the additional flow sensors, respective compressed-air flow rates into or out of the at least one additional inflow or outflow opening, wherein the step of the transmitting an electric control signal with the main controller to at least one of the compressors takes place in further dependence on the respective compressed-air flow rates into or out of the compressed-air installation through the at least one additional inflow or outflow opening.

This embodiment enables a plurality of outflow openings at multiple locations. This also makes it possible to provide conduits between (parts of) compressed-air installations with additional flow sensors, so that and inflow rates or outflow rates between a plurality of (parts of) compressed-air installations can be measured.

As a result, the inflow rate to be supplied can be determined more precisely when compressors or other components of the compressed-air network are placed at a plurality of locations in the compressed-air network.

In a further embodiment, the other controllers are connected to the additional flow sensors, wherein the other controllers transmit the compressed-air outflow rate of the compressed-air installation through the at least one additional outflow opening to the main controller.

This way, the provision of additional flow sensors is facilitated, because the sensors do not need to be connected directly to the main controller. Moreover, in the identical controller reduction or processing of sensor data, which comprise the inflow rate into or the outflow rate of the compressed-air installation, may be performed.

In an embodiment the method further comprises the steps of:
arranging the pressure sensor nearby a first compressed-air buffer of the compressed-air installation;
providing additional pressure sensors near each of the remaining compressed-air buffers of the compressed-air installation;
measuring, with the additional pressure sensors, additional pressure values of the compressed-air installation,
wherein the step of transmitting an electric control signal with the main controller to at least one of the compressors takes place in further dependence on the respective pressure differences between the respective measured additional pressure values of the compressed-air installation and the obtained minimum pressure for the compressed-air installation.

With this embodiment, it becomes possible to control a plurality of compressed-air buffers within a compressed-air installation more precisely. As a result, the buffer capacities of conduits in the compressed-air network can, for example, serve as a compressed-air buffer, or a plurality of physical buffer tanks on a plurality of separated locations within the compressed-air network. In this embodiment it also becomes possible to provide conduits between components in the compressed-air installation with additional pressure sensors, so that a local pressure value in a compressed-air installation can be measured. As a result, a more precise control of the respective components is possible. In a further embodiment of the method the other controllers are connected to the additional pressure sensors, where the other controllers transmit the respective additional pressure values of the compressed-air installation measured by the additional pressure sensors to the main controller.

Therewith, the pressure sensors do not need to be connected directly to the main controller and reduction or processing of sensor data can take place in the identical controller.

When multiple compressors are connected to a large compressed air installation at separate, remote locations, the pressure in the compressed air network at the compressor connections could be different for each location. By having additional pressure sensors, the locally varying pressure values may be measured such that each of the compressors may be controlled more precisely, and that capacity data for each of the compressors may be adjusted more precisely, efficiency factors may be determined more precisely.

Similarly, due to the locally varying pressure values, inflow rates through the inflow openings and/or outflow rates through the openings may be unequal, even if two openings are connected to the same type of compressor or load. By actually measuring respective compressed-air flow rates into or out of the at least one additional inflow or outflow opening, control can be performed more precisely. In particular, when a flow sensor is provided at each of the outflow openings, a total outflow through all outflow openings can be determined precisely.

The invention further provides a system for controlling a plurality of compressors coupled to a compressed-air installation comprising:
- a main controller for controlling the compressors, configured to initially obtain capacity data of the compressors, and to obtain a minimum pressure for the compressed-air installation;
- a pressure sensor, coupled to the compressed-air installation and connected to the main controller, configured to measure a pressure value of the compressed-air installation, wherein the main controller is configured to transmit an electric control signal to at least one of the compressors in order to control the at least one of the compressors to supply a compressed-air inflow rate into the compressed-air installation in dependence on a pressure difference between the measured pressure value and the obtained minimum pressure for the compressed-air installation and the obtained capacity data of the compressors,
**characterised in that** the system further comprises:
- a flow sensor, coupled to the compressed-air installation and connected to the main controller, configured to measure a compressed-air outflow rate of the compressed-air installation;
wherein the main controller is configured to determine the inflow rate to be supplied on the basis of the measured outflow rate and the measured pressure value, and to transmit the electric control signal to at least one of the compressors in dependence on:
▪ the pressure difference between the measured pressure value and the obtained minimum pressure for the compress,
▪ the obtained capacity data of the compressors, and
▪ the measured outflow rate.

In an embodiment, the main controller is further configured to adjust the initially obtained capacity data on the basis of the measured pressure value and the measured outflow rate during operation of the compressed-air installation,
and to transmit the electric control signal to at least one of the compressors in dependence on:
▪ the pressure difference between the measured pressure value and the obtained minimum pressure for the compressed-air installation,
▪ the adjusted capacity data of the compressors, and
▪ the measured outflow rate.

In an embodiment of the system, it further comprises power sensors,
wherein the main controller is configured to determine the of possible inflow rates to be supplied into the compressed-air installation by the compressors individually or in combination, on the basis of the adjusted capacity data of the compressors,
wherein the main controller is configured to determine an expected required power consumption for each of the possible inflow rates to be supplied by the compressors individually or in combination, and wherein the main controller is further configured to update the expected required power consumption of the respective compressors at the respective inflow rate and the measured pressure value, in dependence on the determined consumed power of the respective compressors determined with the power sensors.

In an embodiment of the system, it further comprises an identical controller for each of the compressors for controlling the respective compressors, wherein the identical controllers are configured to be designated as the main controller and to transmit status information about the respective controlled compressors to the main controller.

In an embodiment of the system, it further comprises:
at least one cooling and/or drying system in the compressed-air installation configured to cool and/or dry an inflow rate of the compressed-air installation; and
an identical controller for the at least one cooling and/or drying system for controlling the respective cooling and/or drying system.

In an alternative and/or additional embodiment of the system, it further comprises:
at least one nitrogen generator, such as a pressure swing absorber, in the compressed-air installation, configured to generate an outflow rate of the compressed-air installation of nitrogen, for example using pressure swing absorption; and
an identical controller for the at least one nitrogen generator for controlling the respective nitrogen generator.

The invention further provides use of the system as outlined hereinabove for performing the method as outlined hereinabove, for example for generating oxygen or nitrogen with the compressed-air installation.

Moreover, existing compressed-air installations and/or compressors may be provided with a system for controlling a plurality of compressors coupled to a compressed-air installation. As a result, the method as outlined hereinabove can, for instance, be performed with an existing compressor or compressed-air installation, whereby only a main controller or a plurality of identical controllers need to be provided, to which at least one pressure sensor and a flow sensor are connected.

Further embodiments and aspects of the invention are described in the claims.

### Figures

Additional features and advantages of the invention are clarified by a
description of an embodiment of the invention, with reference to the relevant drawings, in which:
Figure 1 schematically depicts a system for performing the method according to an embodiment of the invention; and
Figure 2 schematically depicts a system for performing the method according to an alternative embodiment of the invention.

In each of the figures, the same reference numbers and signs are used to refer to corresponding components or to components that have a corresponding function.

### Description of the Figures

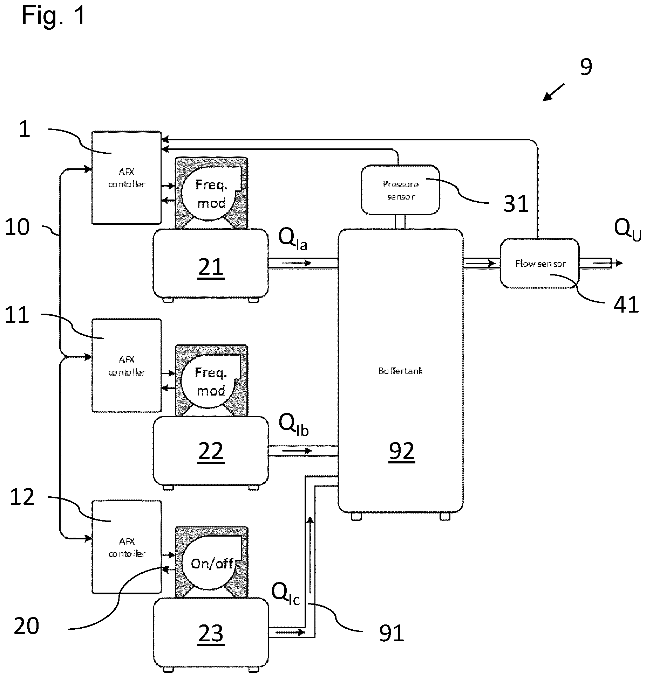

Figure 1 schematically depicts a system for carrying out the method for controlling a plurality of compressors 21, 22, 23 coupled to a compressed-air installation 9 according to an embodiment of the invention. Herein, the compressed-air installation 9 comprises a buffer tank 92 as component and compressed-air conduits 91 between the buffer tank 92 and the coupled compressors 21, 22, 23.

A main controller 1 is provided, connected with the compressors 21, 22, 23 for the respective control, where the main controller 1 is configured to obtain capacity data of the compressors 21, 22, 23 and a minimum pressure for the compressed-air installation 9. Moreover, a pressure sensor 31 is provided for measuring a pressure value of the compressed-air installation 9, and a flow sensor 41, for measuring a compressed-air outflow rate of the compressed-air installation (Qu). Both sensors 31, 41 are connected to the main controller 1, in the present embodiment through the provision of an analogue electric signal, e.g. 4-20 mA, which represents the measured value, to an analogue entry of the main controller 1.

Compressor 21 is a frequency modulating variable speed type, compressor 22 a double working frequency modulating variable speed type, and compressor 23 an on/off type. In a further or alternative embodiment other types or combinations of types of compressors are also possible, for instance a plurality of frequency modulating compressors, both synchronous and asynchronous types operating at a specific frequency.

For each of the compressors 21, 22, 23 respective identical controllers 1, 11, 12 are provided, where one is designated as the main controller ("master"), in this case by switching a switch on the respective main controller 1. In an alternative embodiment, the designation could also take place automatically, for instance because a first identical controller 1, 11, 12 switching on designates itself as main controller 1 and communicates this with the other identical controllers 11, 12. This way, one of the other identical controllers 11, 23 can subsequently designate itself as main controller 1 if the respective identical controller 11, 12 cannot receive control signals from the main controller 1 and/or status information cannot be transmitted to the main controller 1, for instance in case of a defect.

Main controller 1 is configured to transmit electric control signals to the other controllers 11, 12, for instance a pulse signal "Compressor on" or "Compressor off" to switch on or switch off, an analogous control signal "Compressor Speed" to switch to a different rotation speed, "Stage 2 on" or "Stage 3 on" to switch on a 2nd or 3rd speed scale of a double acting compressor or "Valve open" to open or close a compressor valve, e.g. a valve for a neutral option of respective compressor.

The identical controllers 1, 11, 12 are, for instance, attached to the compressors by means of a so-called "top-hat" DIN-rail in conformity with IEC/EN 60715. The identical controllers 1, 11, 12 are configured to, through connection 20, observe status information from a respective compressor 21, 22, 23, e.g. possible and present operating conditions, e.g. a full load, part load, zero load, on, off or deactivated conditions and/or a rotation speed.

The identical controllers 1, 11, 12 are connected to a respective compressor 21, 22, 23 through interruption of a connection 20 between a manufacturing controller present on a compressor and the compressor, wherein the respective identical controller is configured to restore the respective connection 20 automatically if an error occurs in the identical controller 1, 11, 12 such that the available manufacturing controller can control the compressor during the error.

Here the other identical controllers 11, 12 ("slave") are configured to, through connection 10, for instance a serial data bus ("CAN-bus"), transmit status information about respective controlled compressors 22, 23 to the main controller, continuously or periodically, for instance every 0.001 - 10 seconds, in the present embodiment 5 seconds, where the period can be adjusted by the main controller 1.

The status information contains, for instance, an identification number of the respective identical controller 11 and capacity data, a rotation speed, and present and possible operating conditions of the respective compressor 22, 23.

In use, a minimum pressure for the compressed-air installation 9, a maximum flow rate deviation, start-up times, and initial capacity data of the compressors 21, 22, 23 are obtained, in the present embodiment through manual configuration thereof in the identical controllers 1, 11, 12. The initial capacity data comprise possible rotation speeds, the pressures that are possible at a certain rotation speed, the inflow rate into the compressed-air installation at the possible pressures in case of a free compressed-air release and the respective power consumed by the compressor.

The initial capacity data comprise the following data for a possible pressure of 5 bar. The initial capacity data may additionally or alternatively comprise data at other possible pressures. For each compressor 21, 22, 23, the possible inflow rates into the compressed air installation 1 that the respective compressor 21, 22, 23 is able to deliver during normal operation are provided, as well as the power consumed during normal operation and the power consumed during free-running operation of the respective compressor.

| **Compressor** | **Variable speed (21)** | **Double-acting (22)** | **On/off type (23)** |
|---|---|---|---|
| **Free-running** | | | |
| power consumption | 14 kW | 34 kW | 16 kW |

| **Normal operation:** | | | |
|---|---|---|---|
| possible inflow rate power consumption | | | |
| operating condition 1 | 12 m³/min | 12 m³/min | 11 m³/min |
| | 63 kW | 60 kW | 55 kW |
| operating condition 2 | 15 m³/min | 24 m³/min | - |
| | 78 kW | 110 kW | |
| operating condition 3 | 18 m³/min | - | - |
| | 95 kW | | |
| operating condition 4 | 24 m³/min | - | - |
| | 140 kW | | |

As can be observed in the capacity data, in addition to the free-running operation, the on/off compressor 23 has a single normal operation mode, the double-acting compressor 22 has two modes of normal operation, and the variable speed compressor 21 has four modes of normal operation that represent four possible rotation speeds. Additional possible inflow rates and corresponding consumed powers for the variable speed compressor 21 are obtained in the main controller by interpolation of the consumed power and the possible inflow rate between the provided operating conditions in the capacity data. The variable speed compressor 21 uses more power than the other compressors at a similar possible inflow rate.

Further, it is possible to configure prohibited rotation speeds next to the possible rotation speeds. In case of prohibited rotation speeds, certain undesired resonances can occur, as a result of which damages can be inflicted on a compressor. By configuring a prohibited rotation speed, this speed is removed from the possible rotation speeds.

In addition or by way of alternative, the initial capacity data could, for instance, also be obtained through automatic detection of the compressor by the identical controller 1, 11, 12 and then be transmitted to the main controller 1. Optionally, other data, e.g. safety threshold values for a maximum pressure in the compressed-air installation 9, can also be obtained in the main controller 1.

The pressure sensor 31 measures the pressure value of the compressed-air installation 9 and the flow sensor 41 measures the outflow rate of the compressed-air installation (Qu), during a predetermined period.

The main controller 1 can, on the basis of both measurements, the difference between the measured pressure value and the minimum pressure, and increases and/or decreases of both the measured pressure value and the measured outflow rate, and derivatives, integrals or other functions of the same, determine an actual inflow rate to be supplied for a future period, as well as a period up to the exceeding of a minimum pressure for the compressed-air installation and/or other data, e.g. an expected different period in case of a difference between a measured outflow rate (Qu) and an inflow rate to be supplied.

An inflow rate to be supplied into the compressed air installation is determined by the main controller by subtracting the difference between the measured pressure value and the obtained minimum pressure from the measured outflow rate according to Q_{tobesupplied} = Q_{measured} + c * (pₘᵢₙ - P_{measured}). Herein, Q_{tobesupplied} is the determined compressed-air inflow rate to be supplied into the compressed-air installation in m³/min, Q_{measured} is the outflow rate measured with the flow is the correlation factor, which is 1 in this embodiment, pₘₑₐₛ is the measured pressure value (bar) and pₘᵢₙ is the minimum pressure for the compressed air installation (bar).

The predetermined period lasts, for instance, 0.001 - 10 seconds, in the present embodiment 5 seconds, after which all steps are repeated during a subsequent period. The main controller 1 can, if so required, reduce or increase the predetermined period. As a result, controlling can take place faster if this would be required, for instance if the measured pressure value approaches the safety threshold values for a maximum pressure in the compressed-air installation 9 or if the period up to the exceeding of a minimum pressure approaches the start-up time of a compressor. Then, the main controller 1 determines, on the basis of the capacity data, all possible combinations of inflow rates to be supplied (Q_{Ia}, Q_{Ib}, Q_{Ic}) for combinations of all or a part of the compressors 21, 22, 23 at all possible rotation speeds and operating conditions, including a partial load, zero load, on, off or deactivated condition, whereby for each of the inflow rates to be supplied an efficiency factor is determined.

For each of the inflow rates to be supplied an efficiency factor is determined by calculating a first time percentage in which the respective compressors are expected to run in one of the normal operation modes and a second time percentage in which the respective compressors are expected to run in the free-running or neutral operation mode. Then, by multiplying, for each of the respective compressors 21, 22, 23, the first time percentage with the power consumption for normal operation and the second time percentage with the power consumption for free-running operation, a power consumption can be determined for each of the respective compressors 21, 22, 23. The determined possible inflow rates for the first compressor 23 are:

| **Possible inflow rate [m3/min]** | **Compressor flow rate [m3/min]** | **First %** | **Second %** | **Consumed power [kW]** | **Efficiency factor** |
|---|---|---|---|---|---|
| 1 | 11 | 0,090909 | 0,909091 | 19,5454545 | 0,051163 |
| 2 | 11 | 0,181818 | 0,818182 | 23,0909091 | 0,086614 |
| 3 | 11 | 0,272727 | 0,727273 | 26,6363636 | 0,112628 |
| 4 | 11 | 0,363636 | 0,636364 | 30,1818182 | 0,13253 |
| 5 | 11 | 0,454545 | 0,545455 | 33,7272727 | 0,148248 |
| 6 | 11 | 0,545455 | 0,454545 | 37,2727273 | 0,160976 |
| 7 | 11 | 0,636364 | 0,363636 | 40,8181818 | 0,171492 |
| 8 | 11 | 0,727273 | 0,272727 | 44,3636364 | 0,180328 |
| 9 | 11 | 0,818182 | 0,181818 | 47,9090909 | 0,187856 |
| 10 | 11 | 0,909091 | 0,090909 | 51,4545455 | 0,194346 |
| 11 | 11 | 1 | 0 | 55 | 0,2 |

For the double-acting compressor 22, the possible inflow rates and time percentages first % and second % are then as follows:

| **Possible inflow rate [m3/min]** | **Compressor flow rate [m3/min]** | **First** % | **Second** % | **Consumed power [kW]** | **Efficiency factor** |
|---|---|---|---|---|---|
| 2 | 12 | 0,166667 | 0,818182 | 19,8181818 | 0,100917 |
| 4 | 12 | 0,333333 | 0,636364 | 27,6363636 | 0,144737 |
| 6 | 12 | 0,5 | 0,454545 | 35,4545455 | 0,169231 |
| 8 | 12 | 0,666667 | 0,272727 | 43,2727273 | 0,184874 |
| 10 | 12 | 0,833333 | 0,090909 | 51,0909091 | 0,19573 |
| 12 | 12 | 1 | -0,09091 | 58,9090909 | 0,203704 |
| 14 | 24 | 0,583333 | -0,27273 | 60,8939394 | 0,229908 |
| 16 | 24 | 0,666667 | -0,45455 | 67,8787879 | 0,235714 |
| 18 | 24 | 0,75 | -0,63636 | 74,8636364 | 0,240437 |
| 20 | 24 | 0,833333 | -0,81818 | 81,8484848 | 0,244354 |
| 21 | 24 | 0,875 | -0,90909 | 85,3409091 | 0,246072 |
| 22 | 24 | 0,916667 | -1 | 88,8333333 | 0,247655 |
| 24 | 24 | 1 | -1,18182 | 95,8181818 | 0,250474 |

As can be observed, the first and second time percentages are determined taking into account the required operating condition of the double-acting compressor 22. Up to a possible inflow rate of 12 m3/min, the efficiency factor is determined using the first normal operating condition of the double-acting compressor 22, and for higher inflow rates, using the second normal operating condition of the double-acting compressor 22.

For the variable-speed compressor 21, the possible inflow rates and efficiency factors are determined accordingly.

The determined consumed power is divided by the respective possible inflow rate to form the efficiency factor, as depicted in the tables hereinabove.

In order to determine possible inflow rates that are larger than the maximum possible inflow rate of a single compressor, the power consumptions of two or three of the compressors 21, 22, 23 may be determined by summation of the respective consumed powers to determine a combined power consumption for respective compressors to supply the flow rate in combination.

For example, for a determined flow rate to be supplied of 26 m³/min, a combined consumed power may be determined for all combinations of possible inflow rates of two or three compressors that lead to the flow rate to be supplied of 26 m³/min, such as a the sum of the consumed power of the double-acting compressor 22 at 20 m³/min with the double-acting compressor and the consumed power of the on/off compressor at 6 m³/min with the on/off compressor is determined, or 18 m³/min and 8 m³/min, respectively, et cetera. Then, the efficiency factor is determined accordingly, by dividing the combined consumed power by the sum of the possible inflow rates, thus by 26 m³/min.

The combination of inflow rates to be supplied (Q_{Ia}, Q_{Ib}, Q_{Ic}) where the determined efficiency factor is the highest and wherein the possible inflow rate is equal to, or slightly higher than the determined inflow rate to be supplied, and wherein a difference between the selected possible inflow rate and the measured outflow rate (Qu) is smaller than the configured maximum flow rate deviation is now selected by the main controller 1. This way, the main controller 1 accomplishes that the compressors 21, 22, 23 operate within a "most energetic bandwidth".

Subsequently, the required electric control signal is transmitted to the respective at least one of the compressors 21, 22, 23 to supply the selected inflow rate. The respective compressors are then controlled by switching between free-running operation and normal operation such that the respective compressors (21, 22, 23) run in normal operation during the respective first time percentage, and in free-running operation during the respective second time percentage. The selection of the combination of inflow rates to be supplied and/or the subsequent transmitting of the electric control signal is performed periodically, for example according to the predetermined period.

The combination of inflow rates to be supplied (Q_{Ia}, Q_{Ib}, Q_{Ic}) can also be selected in further dependence on other criteria, e.g. an individually recorded usage intensity or operating hours of the respective compressors. By also considering usage intensity or operating hours during the selection, uniform wear and tear of the compressors can be accomplished, so that the compressor characteristics change more equally in the course of time. These kinds of other criteria can, for instance, be combined by weighting factors for the respective criteria with the efficiency factor.

Moreover, the main controller 1 detects whether there is an increase or decrease of the measured pressure value of the compressed-air installation 9 and/or of the measured outflow rate of the compressed-air installation 9 (Qu), during the predetermined period. In case of a signalled decrease of the measured pressure value, an expected period up to attaining the obtained minimum pressure for the compressed-air installation 9 is determined, where the determined expected period is compared with the obtained start-up times of the compressors 21, 22, 23, so that an electric control signal can be transmitted to at least one of the compressors in a timely fashion in order to prevent the obtained minimum pressure for the compressed-air installation 9 being exceeded.

In the case of a detected increase of the measured pressure value and an increase of the outflow rate of the compressed-air installation (Qu) during the predetermined period, or of a detected decrease of the measured pressure value and a decrease of the outflow rate of the compressed-air installation 9 during the predetermined period, the main controller 1 can delay the transmitting an electric control signal to align the inflow (Q_{Ia}, Q_{Ib}, Q_{Ic}) with the outflow (Qu), to anticipate a further increase, respectively decrease, of the measured outflow rate of the compressed-air installation 9 (Qu), where the flow difference between the inflow (Q_{Ia}, Q_{Ib}, Q_{Ic}) and the outflow rate of the compressed-air installation (Qu) must then remain smaller than the maximum flow rate deviation.

Moreover, the main controller takes the obtained start-up times of the compressors into account. After the transmitting an electronic control signal to switch on a first compressor, the transmitting a subsequent electric control signal to switch off a second compressor can be delayed during the start-up time. Here, the transmitting an electric control signal can also be delayed until status information has been received in which the switching on of the first compressor is confirmed.

If a measured pressure value approaches the safety threshold values of the compressed-air installation 9, the main controller 1 will transmit an electric control signal to reduce the inflow. Therewith, a plurality of threshold values may be configured, wherein specific reductions of the inflow are linked to a specific safety threshold value. This functions prevents the pressure from increasing too much, for instance in the event that the outflow suddenly decreases considerably.

The electric control signal is transmitted by the main controller 1 directly to a directly connected compressor 21 through connection 20 and to the other compressors 22, 23 indirectly through connection 10 to the respective identical controllers 11, 12 that transmit the control signal to the other compressors 22, 23.

After receipt of a control signal by a compressor 21, 22, 23 the control signal can be processed by the respective compressor.

The capacity data initially obtained in the main controller 1 can, on the basis of the measured pressure value and the measured outflow rate (Qu) during the operation of the compressed-air installation 9, when required, always be adjusted. As a result, ever more accurate capacity data can be obtained for the specific compressed-air installation, in particular capacity data that are better in line with compressor characteristics that change in time.

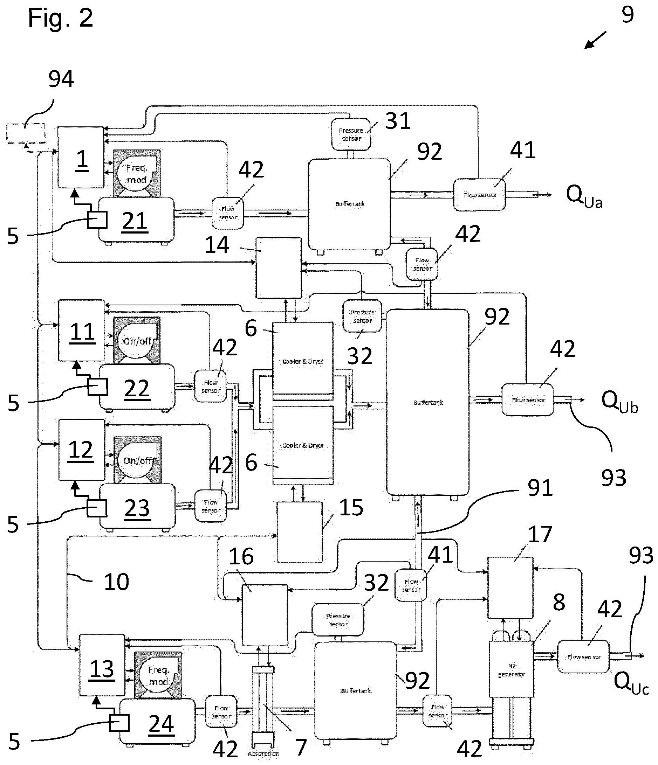

Figure 2 schematically depicts a system for carrying out the method according to an alternative embodiment of the invention. Here, four compressors 21, 22, 23, 24 are connected to a compressed-air installation 9, provided with identical controllers 1, 11, 12, 13, of which one is designated as main controller 1. Moreover, a power sensor 5 is provided for each of the compressors 21, 22, 23, 24, each configured to determine actually consumed power of the respective compressor, by measuring voltage, current and phase shift on the electrical connections of the respective compressors.

In addition, cooling and drying installations 6 are provided in the compressed-air installation 9, each with an identical controller 14, 15 for the respective control, an absorption cooler 7, provided with an identical controller 16, and a nitrogen generator 8, namely a pressure change absorber, provided with an identical controller 17.

The compressed-air installation 9 is provided with additional outflow openings 93 through which an outflow rate can flow out of the compressed-air installation 9. As a result, the outflow rate comprises three outflow rates (Q_{Ua}, Q_{Ub}, Q_{Uc}). Each of the additional outflow openings 93 is provided with an additional flow sensor 42, each connected with one of the other controllers (in this embodiment 11, 17). Additional flow sensors 42 are also placed at additional locations within the compressed-air installation 9, between compressed-air buffers 92 to measure flow rates between the compressed-air buffers, after each of the compressors 21, 22, 23, 24 to measure the total inflow, and for nitrogen generator 8.

Moreover, the pressure sensor 31 is placed near a first compressed-air buffer 92 of the compressed-air installation 9, and is provided with additional pressures sensors 32 near each of the other compressed-air buffers 92 of the compressed-air installation 9. The additional pressure sensors 32 are connected with the other controllers 13, 14.

In addition or alternatively, additional pressure sensors can be placed at other locations within the compressed-air network. For instance, additional pressure sensors could be provided behind the compressors 21, 22, 23, 24 in addition, or by way of alternative, to additional flow sensors 42.

A graphic user interface 94 is provided, connected to main controller 1, and configured to show data of the compressed-air system, e.g. the status, and to configure setting, e.g. the minimum pressure for the compressed-air installation 9, a maximum flow rate deviation, start-up times and initial capacity data of the compressors 21, 22, 23, 24.

In the compressed-air installation, near outflow openings of the cooling and drying installation 6 and absorption cooler 7, humidity sensors 6 are provided (not shown), which are connected to other controllers 15, 16.

In addition to the embodiment of Figure 1, the use of the installation of Figure 2 comprises - during measuring the pressure value with pressure sensor 31 and measuring the outflow rate (Q_{Ua}) with flow sensor 41 - measuring, with the additional pressure sensors 32, of additional pressure values of the compressed-air installation 9, and measuring, with the additional flow sensors 42, the respective compressed-air flow rates, including the outflow rates of the additional outflow openings 93 (Q_{Ub}, Q_{Uc}), and determining, with the power sensors 5, the actual power consumed by the respective compressors 21, 22, 23, 24, and measuring, with the humidity sensors, humidity values of the compressed-air installation, by means of a dew point measurement.

Hereby, the additional pressure values of the compressed-air installation 9 measured by the additional pressures sensors 31, the flow rates measured by the additional flow sensors 42, the actual consumed power measured by the power sensors 5, and the humidity values measured by the humidity sensors are transmitted to the main controller 1 by the connected identical controllers, so that the respective sensors do not need to be connected directly to the main controller and the identical controller can reduce or process the measured value.

The main controller 1 can, on the basis of the measured actual consumed power, adjust the determined efficiency factors of the respective compressors, in particular with the precisely measured outflow rate and the measured pressure value. In particular, the initial possible inflow rate to be supplied are replaced by a calculated inflow rate based on the measured outflow rate of the compressed air installation at the respective measured pressure value. The updated efficiency factors shall, consequently, become more precise than the efficiency factors on the basis of the initial capacity data, and thus better correspond with reality, focused on the specific compressor.

Transmitting, with the main controller, an electric control signal can now take place in further dependence on the updated efficiency factors, the additional pressure values of the compressed-air installation 9 measured by the additional pressure sensors 31, and the flow rates measured by the additional flow sensors 42.

In addition, the step of transmitting, with the main controller, an electric control signal to the cooling or drying installation 6 and the absorption cooler 7 can now take place in further dependence on the humidity values measured with the humidity sensors.

The control signal can be transmitted to at least one of the components in or at the compressed-air installation 9, e.g. the compressors 21, 22, 23, 24, the cooling or drying installation 6, and the absorption cooler 7 and/or the nitrogen generator 8. As a result, the flow rates going through these components can be aligned, so that the operation of the respective components can be improved and the energy consumption can be reduced further.

In addition to the shown and described embodiments, there are numerous possible variants. For instance, the dimensions and forms of the various components can be adjusted, and various compressed-air systems and types of components can be controlled by means of the invention. It is also possible to create combinations between advantageous aspects of the embodiments.

## Claims

1. Method for controlling a plurality of compressors (21, 22, 23) coupled to a compressed-air installation (9), wherein the method comprises the steps of:
- providing:
∘ a plurality of compressors (21, 22, 23),
∘ a main controller (1) to control the compressors (21, 22, 23), and
∘ a pressure sensor (31), coupled to the compressed-air installation (9) and connected with the main controller (1),
- obtaining, in the main controller (1), capacity data of the compressors (21, 22, 23);
- obtaining, in the main controller (1), a minimum pressure for the compressed-air installation (9);
- measuring, with the pressure sensor (31), a pressure value of the compressed-air installation (9);
- transmitting, with the main controller (1), an electric control signal to at least one of the compressors (21, 22, 23), in order to control the at least one of the compressors (21, 22, 23) to supply a compressed-air inflow rate (Q_{Ia}, Q_{Ib}, Q_{Ic}) into the compressed-air installation (9) with the compressors in dependence on:
▪ a pressure difference between the measured pressure value and the obtained minimum pressure for the compressed-air installation (9), and
▪ the obtained capacity data of the compressors (21, 22, 23),
**characterised in that** the method further comprises the steps of:
- providing a flow sensor (41), coupled to the compressed-air installation (9) and connected to the main controller (1);
- measuring, with the flow sensor (41), a compressed-air outflow rate (Qu) of the compressed-air installation (9),
wherein the inflow rate (Q_{Ia}, Q_{Ib}, Q_{Ic}) to be supplied is determined on the basis of the measured outflow rate (Qu) and the measured pressure value, and
wherein the step of the transmitting an electric control signal with the main controller (1) to at least one of the compressors (21, 22, 23) to supply the determined compressed-air inflow rate (Q_{Ia}, Q_{Ib}, Q_{Ic}) takes place in further dependence on:
▪ the pressure difference between the measured pressure value and the obtained minimum pressure for the compressed-air installation (9),
▪ the obtained capacity data of the compressors (21, 22, 23), and
▪ the measured outflow rate (Qu).

2. Method according to claim 1, further comprising the step of:
- adjusting initially obtained capacity data on the basis of the measured pressure value and the measured outflow rate (Qᵤ) during operation of the compressed-air installation (9), wherein the step of the transmitting an electric control signal with the main controller (1) to at least one of the compressors (21, 22, 23) to supply the determined compressed-air inflow rate (Q_{Ia}, Q_{Ib}, Q_{Ic}) takes place in dependence on:
▪ the pressure difference between the measured pressure value and the obtained minimum pressure for the compressed-air installation (9),
▪ the adjusted capacity data of the compressors (21, 22, 23), and
▪ the measured outflow rate (Qu).

3. Method according to claim 1 or 2, wherein, before the step of the transmitting an electric control signal with the main controller (1) to at least one of the compressors (21, 22, 23) the steps take place of:
- determining possible inflow rates (Q_{Ia}, Q_{Ib}, Q_{Ic}) to be supplied by the compressors (21, 22, 23) individually or in combination , on the basis of capacity data of the compressors (21, 22, 23),
wherein the main controller (1) determines a required electric control signal and an efficiency factor of the compressors (21, 22, 23) for each of the determined possible inflow rates (Q_{Ia}, Q_{Ib}, Q_{Ic}) to be supplied by the compressors (21, 22, 23) individually or in combination; and
- selecting one of the determined possible inflow rates (Q_{Ia}, Q_{Ib}, Q_{Ic}) to be supplied by the compressors (21, 22, 23) individually or in combination in order to transmit the corresponding required electric control signal to at least one of the compressors (21, 22, 23) to supply the selected inflow rate (Q_{Ia}, Q_{Ib}, Q_{Ic}), in dependence on:
▪ the determined inflow rate (Q_{Ia}, Q_{Ib}, Q_{Ic}) to be supplied determined on the basis of:
∘ the measured outflow rate (Qu) of the compressed-air installation (9), and
∘ the pressure difference between the measured pressure value and the obtained minimum pressure for the compressed-air installation (9), and
the determined efficiency factors for each of the determined possible inflow rates (Q_{Ia}, Q_{Ib}, Q_{Ic}) to be supplied by the compressors (21, 22, 23) individually or in combination,
for example further comprising the step of:
- obtaining, in the main controller (1), a maximum flow rate deviation,
wherein, during the step of the selection of one of the possible inflow rates (Q_{Ia}, Q_{Ib}, Q_{Ic}) to be supplied by the compressors (21, 22, 23) individually or in combination, that inflow rate (Q_{Ia}, Q_{Ib}, Q_{Ic}) to be supplied is selected for which a difference with the measured outflow rate (Qu) of the compressed-air installation (9) is smaller than the obtained maximum flow rate deviation and for which the determined efficiency factor is maximal.

4. Method according to claim 3, further comprising the steps of:
- providing, for each of the compressors (21, 22, 23), a power sensor (5), configured to determine actual power consumption of the respective compressor (21, 22, 23);
- determining, with the power sensors, the actual power consumptions of the respective compressors (21, 22, 23);
- updating the determined efficiency factors of the respective compressors (21, 22, 23) at the respective inflow rate and the measured pressure value, in dependence on the determined actual power consumption of the respective compressors (21, 22, 23).

5. Method according to any of the preceding claims, further comprising the steps of:
- obtaining start-up times of the compressors (21, 22, 23);
- detecting an increase or decrease of the measured pressure value of the compressed-air installation (9) during a predetermined period,
- determination an increase or decrease of the outflow rate (Qu) of the compressed-air installation (9) during the predetermined period,
- computing, in the event of a decrease of the measured pressure value, an expected time to reach the obtained minimum pressure for the compressed-air installation (9) with the increase or decrease of the outflow rate (Qu) of the compressed-air installation (9),
wherein the step transmitting an electric control signal with the main controller (1) to at least one of the compressors (21, 22, 23) is carried out before the computed expected time reaches a value that is smaller than the obtained start-up time of the respective at least one of the compressors (21, 22, 23),
for example further comprising the steps of:
- in the event of a detected increase of the measured pressure value and a determined increase of the outflow rate (Qu) of the compressed-air installation (9) during the predetermined period, only transmitting an electric control signal to at least one of the compressors (21, 22, 23) with the main controller (1) when a difference between the inflow rate (Q_{Ia}, Q_{Ib}, Q_{Ic}) to be supplied by the compressors (21, 22, 23) individually or in combination and the measured outflow rate (Qu) of the compressed-air installation (9) during a predetermined period exceeds the obtained maximum flow rate deviation, and
- in the event of a detected decrease of the measured pressure value and a determined decrease of the outflow rate of the compressed-air installation during the predetermined period, only transmitting an electric control signal to at least one of the compressors (21, 22, 23) with the main controller (1) when a difference between the inflow rate (Q_{Ia}, Q_{Ib}, Q_{Ic}) to be supplied by the compressors (21, 22, 23) individually or in combination and the measured outflow rate (Qu) of the compressed-air installation (9) during a predetermined period exceeds the obtained maximum flow rate deviation.

6. Method according to any of the preceding claims, further comprising the steps of:
- providing identical controllers (1, 11, 12, 13, 14, 15, 16) for each of the compressors (21, 22, 23) for controlling the respective compressors (21, 22, 23);
- connecting each of the sensors (31, 32, 41, 42) to one or multiple of the identical controllers (1, 11, 12, 13, 14, 15, 16),
- designating one of the identical controllers (1, 11, 12, 13, 14, 15, 16) as the main controller (1),
wherein the main controller (1) transmits the electric control signals to the other controllers (11, 12, 13, 14, 15, 16), and wherein the other controllers (11, 12, 13, 14, 15, 16) transmit status information about the respective controlled compressors (21, 22, 23) to the main controller (1),
for example further comprising the steps of:
- providing:
∘ at least one cooling and/or drying system (6) in the compressed-air installation (9),
∘ an identical controller (14, 15) for the at least one cooling and/or drying system (6) for controlling the respective cooling and/or drying system (6);
- transmitting, with the main controller (1), an electric control signal to at least one of the at least one cooling and/or drying system (6), in order to cool and/or dry an inflow rate of compressed-air into the compressed-air installation (9) with the respective cooling and/or drying system (6),
and/or further comprising the steps of:
- providing:
∘ at least one nitrogen generator (8), such as a pressure swing absorber, in the compressed-air installation (9),
∘ identical controllers (17) for the at least one nitrogen generator (8) for controlling the respective nitrogen generator (8);
- transmitting, with the main controller (1), an electric control signal to at least one of the at least one nitrogen generator (8), in order to, with the respective nitrogen generator (8), generate an outflow rate of the compressed-air installation (9) of nitrogen, for example using pressure swing absorption.

7. Method according to any of the preceding claims, further comprising the steps of:
- providing:
∘ at least one additional inflow or outflow opening (93) through which an inflow rate of the compressed-air installation (9) or the compressed-air outflow rate can flow into, respectively out of, the compressed-air installation (9),
∘ additional flow sensors (42) at each of the at least one additional inflow or outflow opening (93);
- measuring, with the additional flow sensors (42), respective compressed-air flow rates into or out of the at least one additional inflow or outflow opening (93),
wherein the step of the transmitting an electric control signal with the main controller (1) to at least one of the compressors (21, 22, 23) takes place in further dependence on the respective compressed-air flow rates (Q_{Ia}, Q_{Ib}, Q_{Ic} Q_{U}) into or out of the compressed-air installation (9) through the at least one additional inflow or outflow opening (93).

8. Method according to claims 6 and 7 wherein the other controllers (11, 12, 13, 16, 17) are connected to the respective additional flow sensors (42),
wherein the other controllers (11, 12, 13, 16, 17) transmit the compressed-air outflow rate (Qu) of the compressed-air installation (9) through the at least one additional outflow opening (93) to the main controller (1).

9. Method according to any of the preceding claims, further comprising the steps of:
- arranging the pressure sensor (31) nearby a first compressed-air buffer (92) of the compressed-air installation (9);
- providing:
∘ additional pressure sensors (32) near each of the remaining compressed-air buffers of the compressed-air installation (9);
- measuring, with the additional pressure sensors (32), additional pressure values of the compressed-air installation (9),
wherein the step of transmitting an electric control signal with the main controller (1) to at least one of the compressors (21, 22, 23) takes place in further dependence on the respective pressure differences between the respective measured additional pressure values of the compressed-air installation (9) and the obtained minimum pressure for the compressed-air installation (9),

10. Method according to claims 6 and 9, wherein the other controllers (11, 12, 13, 16, 17) are connected to the additional pressure sensors (32),
wherein the other controllers (11, 12, 13, 16, 17) transmit the additional pressure values of the compressed-air installation (9) measured by the additional pressure sensors (32) to the main controller (1).

11. System for controlling a plurality of compressors (21, 22, 23) coupled to a compressed-air installation (9), comprising:
- a main controller (1) for controlling the compressors (21, 22, 23), configured to obtain capacity data of the compressors (21, 22, 23), and to obtain a minimum pressure for the compressed-air installation (9);
- a pressure sensor (31), coupled to the compressed-air installation (9) and connected to the main controller (1), configured to measure a pressure value of the compressed-air installation (9),
wherein the main controller (1) is configured to transmit an electric control signal to at least one of the compressors (21, 22, 23) in order to control the at least one of the compressors (21, 22, 23) to supply a compressed-air inflow rate (Q_{Ia}, Q_{Ib}, Q_{Ic}) into the compressed-air installation (9) in dependence on:
▪ a pressure difference between the measured pressure value and the obtained minimum pressure for the compressed-air installation (9); and
▪ the obtained capacity data of the compressors (21, 22, 23),
**characterised in that** the system further comprises:
- a flow sensor (41), coupled to the compressed-air installation (9) and connected to the main controller (1), configured to measure a compressed-air outflow rate of the compressed-air installation (9);
wherein the main controller is configured to determine the inflow rate (Q_{Ia}, Q_{Ib}, Q_{Ic}) to be supplied on the basis of the measured outflow rate (Qu) and the measured pressure value, and to transmit the electric control signal to at least one of the compressors in dependence on:
▪ the pressure difference between the measured pressure value and the obtained minimum pressure for the compressed-air installation (9),
▪ the obtained capacity data of the compressors (21, 22, 23), and
▪ the measured outflow rate (Qu).

12. System according to claim 11, wherein the main controller is further configured to adjust the initially obtained capacity data on the basis of the measured pressure value and the measured outflow rate (Qᵤ) during operation of the compressed-air installation (9),
and to transmit the electric control signal to at least one of the compressors (21, 22, 23) in dependence on:
▪ the pressure difference between the measured pressure value and the obtained minimum pressure for the compressed-air installation (9),
▪ the adjusted capacity data of the compressors (21, 22, 23), and
▪ the measured outflow rate (Qu).

13. System according to claim 11 or 12, further comprising:
- power sensors (5),
wherein the main controller (1) is configured to determine the possible inflow rates (Q_{Ia}, Q_{Ib}, Q_{Ic}) to be supplied into the compressed-air installation (9) by the compressors (21, 22, 23) individually or in combination, on the basis of the capacity data of the compressors,
wherein the main controller (1) is configured to determine an expected required power consumption for each of the possible inflow rates (Q_{Ia}, Q_{Ib}, Q_{Ic}) to be supplied by the compressors (21, 22, 23) individually or in combination, and
wherein the main controller (1) is further configured to update the expected required power consumption of the respective compressors (21, 22, 23) at the respective inflow rate and the measured pressure value, in dependence on the determined consumed power of the respective compressors determined with the power sensors (5).

14. System according to any of the claims 11-13, further comprising:
- an identical controller (1, 11, 12, 13, 14, 15, 16) for each of the compressors (21, 22, 23) for controlling the respective compressors (21, 22, 23),
wherein the identical controllers (1, 11, 12, 13, 14, 15, 16) are configured to be designated as the main controller (1) and to transmit status information about the respective controlled compressors (21, 22, 23) to the main controller (1),
for example further comprising:
- at least one cooling and/or drying system (6) in the compressed-air installation (9) configured to cool and/or dry an inflow rate of the compressed-air installation (9), and/or at least one nitrogen generator (8), such as a pressure swing absorber, in the compressed-air installation (9), configured to generate an outflow rate of the compressed-air installation (9) of nitrogen, for example using pressure swing absorption, and an identical controller (14, 15) for the at least one cooling and/or drying system (6) for controlling the respective cooling and/or drying system (6) and/or an identical controller (17) for the at least one nitrogen generator (8) for controlling the respective nitrogen generator (8).

15. Use of the system according to any of the claims 11-14 for performing the method according to any of the claims 1-10.

## Patentansprüche

1. Verfahren zur Steuerung einer Vielzahl von an eine Druckluftanlage (9) gekoppelten Kompressoren (21, 22, 23), wobei das Verfahren die Schritte umfasst:
- Bereitstellen:
∘ einer Vielzahl von Kompressoren (21, 22, 23),
∘ einer Hauptsteuerung (1) zur Steuerung der Kompressoren (21, 22, 23), und
∘ eines Drucksensors (31), der an die Druckluftanlage (9) gekoppelt und mit der Hauptsteuerung (1) verbunden ist,
- Erhalten, in der Hauptsteuerung (1), von Kapazitätsdaten der Kompressoren (21, 22, 23);
- Erhalten, in der Hauptsteuerung (1), eines Mindestdrucks für die Druckluftanlage (9);
- Messen, mit dem Drucksensor (31), eines Druckwertes der Druckluftanlage (9);
- Übermitteln, mit der Hauptsteuerung (1), eines elektrischen Steuersignals an mindestens einen der Kompressoren (21, 22, 23), um den mindestens einen der Kompressoren (21, 22, 23) zu steuern, mit den Kompressoren eine Druckluft-Zuflussrate (Q_{Ia}, Q_{Ib}, Q_{Ic}) in die Druckluftanlage (9) zu liefern in Abhängigkeit von:
▪ einer Druckdifferenz zwischen dem gemessenen Druckwert und dem bestimmten Mindestdruck für die Druckluftanlage (9), und
▪ den erhaltenen Kapazitätsdaten der Kompressoren (21, 22, 23),
**dadurch gekennzeichnet, dass** das Verfahren ferner die Schritte umfasst:
- Bereitstellen eines Durchflusssensors (41), der an die Druckluftanlage (9) gekoppelt und mit der Hauptsteuerung (1) verbunden ist;
- Messen einer Druckluft-Abflussrate (Qu) der Druckluftanlage (9) mit dem Durchflusssensor (41),
wobei die zu liefernde Zuflussrate (Q_{Ia}, Q_{Ib}, Q_{Ic}) basierend auf der gemessenen Abflussrate (Qu) und dem gemessenen Druckwert bestimmt wird, und
wobei der Schritt des Übermittelns eines elektrischen Steuersignals mit der Hauptsteuerung (1) an mindestens einen der Kompressoren (21, 22, 23) zur Bereitstellung der bestimmten Druckluft-Zuflussrate (Q_{Ia}, Q_{Ib}, Q_{Ic}) ferner erfolgt in Abhängigkeit von:
▪ der Druckdifferenz zwischen dem gemessenen Druckwert und dem bestimmten Mindestdruck für die Druckluftanlage (9),
▪ den erhaltenen Kapazitätsdaten der Kompressoren (21, 22, 23), und
▪ der gemessenen Abflussrate (Qu).

2. Verfahren nach Anspruch 1, ferner umfassend den Schritt:
- Anpassen initial erhaltener Kapazitätsdaten basierend auf dem gemessenen Druckwert und der gemessenen Abflussrate (Qu) während des Betriebs der Druckluftanlage (9), wobei der Schritt des Übermittelns eines elektrischen Steuersignals mit der Hauptsteuerung (1) an mindestens einen der Kompressoren (21, 22, 23), um die bestimmte Druckluft-Zuflussrate (Q_{Ia}, Q_{Ib}, Q_{Ic}) zu liefern, in Abhängigkeit erfolgt von:
▪ der Druckdifferenz zwischen dem gemessenen Druckwert und dem bestimmten Mindestdruck für die Druckluftanlage (9),
▪ den angepassten Kapazitätsdaten der Kompressoren (21, 22, 23), und
▪ der gemessenen Abflussrate (Qu).

3. Verfahren nach Anspruch 1 oder 2, wobei vor dem Schritt des Übermittelns eines elektrischen Steuersignals mit der Hauptsteuerung (1) an mindestens einen der Kompressoren (21, 22, 23) die Schritte erfolgen:
- Bestimmen der möglichen Zuflussraten (Q_{Ia}, Q_{Ib}, Q_{Ic}), die von den Kompressoren (21, 22, 23) einzeln oder in Kombination geliefert werden sollen, basierend auf Kapazitätsdaten der Kompressoren (21, 22, 23),
wobei die Hauptsteuerung (1) für jede der bestimmten möglichen Zuflussraten (Q_{Ia}, Q_{Ib}, Q_{Ic}), die von den Kompressoren (21, 22, 23) einzeln oder in Kombination geliefert werden sollen, ein erforderliches elektrisches Steuersignal und einen Wirkungsgrad der Kompressoren (21, 22, 23) bestimmt; und
- Auswählen einer der bestimmten möglichen Zuflussraten (Q_{Ia}, Q_{Ib}, Q_{Ic}), die von den Kompressoren (21, 22, 23) einzeln oder in Kombination geliefert werden sollen, um das entsprechende erforderliche elektrische Steuersignal an mindestens einen der Kompressoren (21, 22, 23) zu übermitteln, um die gewählte Zuflussrate (Q_{Ia}, Q_{Ib}, Q_{Ic}) zu liefern in Abhängigkeit von:
▪ der bestimmten Zuflussrate (Q_{Ia}, Q_{Ib}, Q_{Ic}), die geliefert werden soll, bestimmt basierend auf:
∘ der gemessenen Abflussrate (Qᵤ) der Druckluftanlage (9), und
oder Druckdifferenz zwischen dem gemessenen Druckwert und dem bestimmten Mindestdruck für die Druckluftanlage (9), und
die bestimmten Wirkungsgrade für jede der bestimmten möglichen Zuflussraten (Q_{Ia}, Q_{Ib}, Q_{Ic}), die von den Kompressoren (21, 22, 23) einzeln oder in Kombination geliefert werden sollen, beispielsweise ferner den Schritt umfassen:
- Erhalten, in der Hauptsteuerung (1), einer maximalen Durchflussratenabweichung, wobei während des Schritts der Auswahl einer der möglichen Zuflussraten ((Q_{Ia}, Q_{Ib}, Q_{Ic}), die von den Kompressoren (21, 22, 23) einzeln oder in Kombination geliefert werden sollen, die zu liefernde Zuflussrate (Q_{Ia}, Q_{Ib}, Q_{Ic}) ausgewählt wird, bei der eine Differenz zur gemessenen Abflussrate (Qu) der Druckluftanlage (9) kleiner als die erhaltene maximale Durchflussratenabweichung ist und für den der bestimmte Wirkungsgrad maximal ist.

4. Verfahren nach Anspruch 3, ferner umfassend die Schritte:
- Bereitstellen, für jeden der Kompressoren (21, 22, 23), eines Leistungssensors (5), der dazu ausgebildet ist, die tatsächliche Leistungsaufnahme des jeweiligen Kompressors (21, 22, 23) zu bestimmen;
- Bestimmen der tatsächlichen Leistungsaufnahme der jeweiligen Kompressoren (21, 22, 23) mit den Leistungssensoren;
- Aktualisieren der bestimmten Wirkungsgrade der jeweiligen Kompressoren (21, 22, 23) bei der jeweiligen Zuflussrate und dem gemessenen Druckwert in Abhängigkeit von der bestimmten tatsächlichen Leistungsaufnahme der jeweiligen Kompressoren (21, 22, 23).

5. Verfahren nach einem der vorangehenden Ansprüche, ferner umfassend die Schritte:
- Erhalten der Anlaufzeiten der Kompressoren (21, 22, 23);
- Erkennen eines Anstiegs oder Abfalls des gemessenen Druckwerts der Druckluftanlage (9) während eines vorgegebenen Zeitraums,
- Bestimmen einer Zunahme oder Abnahme der Abflussrate (Qu) der Druckluftanlage (9) während des vorgegebenen Zeitraums,
- Berechnen, im Falle einer Abnahme des gemessenen Druckwerts, einer erwarteten Zeit bis zum Erreichen des erreichten Mindestdrucks für die Druckluftanlage (9) bei Zunahme oder Abnahme der Abflussrate (Qu) der Druckluftanlage (9),
wobei der Schritt des Übermittelns eines elektrischen Steuersignals mit der Hauptsteuerung (1) an mindestens einen der Kompressoren (21, 22, 23) ausgeführt wird, bevor die berechnete erwartete Zeit einen Wert erreicht, der kleiner als die erhaltene Anlaufzeit des jeweiligen mindestens einen der Kompressoren (21, 22, 23) ist,
beispielsweise ferner umfassend die Schritte:
- im Falle eines erkannten Anstiegs des gemessenen Druckwertes und eines bestimmten Anstiegs der Abflussrate (Qu) der Druckluftanlage (9) während des vorgegebenen Zeitraums, lediglich Übermitteln eines elektrischen Steuersignals an mindestens einen der Kompressoren (21, 22, 23) mit der Hauptsteuerung (1), wenn eine Differenz zwischen der Zuflussrate (Q_{Ia}, Q_{Ib}, Q_{Ic}), die von den Kompressoren (21, 22, 23) einzeln oder in Kombination geliefert werden soll, und der gemessenen Abflussrate (Qu) der Druckluftanlage (9) während eines vorgegebenen Zeitraums die erhaltene maximale Durchflussabweichung überschreitet, und
- im Falle eines erkannten Abfalls des gemessenen Druckwertes und eines bestimmten Abfalls der Abflussrate der Druckluftanlage während des vorgegebenen Zeitraums, lediglich Übermitteln eines elektrischen Steuersignals an mindestens einen der Kompressoren (21, 22, 23) mit der Hauptsteuerung (1), wenn eine Differenz zwischen der Zuflussrate (Q_{Ia}, Q_{Ib}, Q_{Ic}), die von den Kompressoren (21, 22, 23) einzeln oder in Kombination geliefert werden soll, und der gemessenen Abflussrate (Qu) der Druckluftanlage (9) während eines vorgegebenen Zeitraums die erhaltene maximale Durchflussabweichung überschreitet.

6. Verfahren nach einem der vorhergehenden Ansprüche, ferner umfassend die Schritte:
- Bereitstellen identischer Steuerungen (1, 11, 12, 13, 14, 15, 16) für jeden der Kompressoren (21, 22, 23) zum Steuern der jeweiligen Kompressoren (21, 22, 23);
- Verbinden von jedem der Sensoren (31, 32, 41, 42) mit einer oder mehreren der identischen Steuerungen (1, 11, 12, 13, 14, 15, 16),
- Festlegen einer der identischen Steuerungen (1, 11, 12, 13, 14, 15, 16) als Hauptsteuerung (1),
wobei die Hauptsteuerung (1) die elektrischen Steuersignale an die anderen Steuerungen (11, 12, 13, 14, 15, 16) übermittelt, und wobei die anderen Steuerungen (11, 12, 13, 14, 15, 16) Statusinformationen über die jeweils gesteuerten Kompressoren (21, 22, 23) an die Hauptsteuerung (1) übermitteln, beispielsweise ferner umfassend die Schritte:
- Bereitstellen:
∘ mindestens eines Kühl- und/oder Trocknungssystem (6) in der Druckluftanlage (9),
∘ einer identischen Steuerung (14, 15) für das mindestens eine Kühl- und/oder Trocknungssystem (6) zur Steuerung des jeweiligen Kühl- und/oder Trocknungssystems (6);
- Übermitteln, mit der Hauptsteuerung (1), eines elektrischen Steuersignals an mindestens eines des mindestens einen Kühl- und/oder Trocknungssystems (6), um eine Zuflussrate von Druckluft in die Druckluftanlage (9) mit dem jeweiligen Kühl- und/oder Trocknungssystem (6) zu kühlen und/oder zu trocknen,
und/oder ferner umfassend die Schritte:
- Bereitstellen:
∘ mindestens eines Stickstoffgenerators (8), beispielsweise einen Druckwechselabsorbers, in der Druckluftanlage (9),
∘ identischer Steuerungen (17) für den mindestens einen Stickstoffgenerator (8) zur Steuerung des jeweiligen Stickstoffgenerators (8);
- Übermitteln eines elektrischen Steuersignals mit der Hauptsteuerung (1) an mindestens einen des mindestens einen Stickstoffgenerators (8), um mit dem jeweiligen Stickstoffgenerator (8) eine Abflussrate der Druckluftanlage (9) von Stickstoff beispielsweise mittels Druckwechselabsorption zu erzeugen.

7. Verfahren nach einem der vorangehenden Ansprüche, ferner umfassend die Schritte:
- Bereitstellen:
∘ mindestens einer zusätzliche Zufluss- oder Abflussöffnung (93), durch die eine Zuflussrate der Druckluftanlage (9) oder die Druckluft-Abflussrate in die bzw. aus der Druckluftanlage (9) fließen kann,
∘ zusätzlicher Durchflusssensoren (42) an jeder der mindestens einen zusätzlichen Zufluss- oder Abflussöffnung (93);
- Messen, mit den zusätzlichen Durchflusssensoren (42), jeweiliger Druckluft-Durchflussraten in die oder aus der mindestens einen zusätzlichen Zufluss- oder Abflussöffnung (93),
wobei der Schritt des Übermittelns eines elektrischen Steuersignals mit der Hauptsteuerung (1) an mindestens einen der Kompressoren (21, 22, 23) ferner in Abhängigkeit von den jeweiligen Druckluft-Durchflussraten (Q_{Ia}, Q_{Ib}, Q_{Ic}, Q_{U}) in oder aus der Druckluftanlage (9) durch die mindestens eine zusätzliche Zufluss- oder Abflussöffnung (93) erfolgt.

8. Verfahren nach den Ansprüchen 6 und 7, wobei die anderen Steuerungen (11, 12, 13, 16, 17) mit den jeweiligen zusätzlichen Durchflusssensoren (42) verbunden sind,
wobei die anderen Steuerungen (11, 12, 13, 16, 17) die Druckluft-Abflussrate (Qu) der Druckluftanlage (9) durch die mindestens eine zusätzliche Abflussöffnung (93) an die Hauptsteuerung übermitteln (1).

9. Verfahren nach einem der vorangehenden Ansprüche, ferner umfassend die Schritte:
- Anordnen des Drucksensors (31) in der Nähe eines ersten Druckluftpuffers (92) der Druckluftanlage (9);
- Bereitstellen:
o zusätzlicher Drucksensoren (32) in der Nähe jedes der übrigen Druckluftpuffer der Druckluftanlage (9);
- Messen zusätzlicher Druckwerte der Druckluftanlage (9) mit den zusätzlichen Drucksensoren (32),
wobei der Schritt des Übermittelns eines elektrischen Steuersignals mit der Hauptsteuerung (1) an mindestens einen der Kompressoren (21, 22, 23) ferner in Abhängigkeit von den jeweiligen Druckdifferenzen zwischen den jeweiligen gemessenen zusätzlichen Druckwerten der Druckluftanlage (9) und dem erhaltenen Mindestdruck für die Druckluftanlage (9) erfolgt.

10. Verfahren nach den Ansprüchen 6 und 9, wobei die anderen Steuerungen (11, 12, 13, 16, 17) mit den zusätzlichen Drucksensoren (32) verbunden sind, wobei die anderen Steuerungen (11, 12, 13, 16, 17) die von den anderen Drucksensoren (32) gemessenen zusätzlichen Druckwerte der Druckluftanlage (9) an die Hauptsteuerung (1) übermitteln.

11. System zur Steuerung einer Vielzahl von Kompressoren (21, 22, 23), die an eine Druckluftanlage (9) gekoppelt sind, umfassend:
- eine Hauptsteuerung (1) zur Steuerung der Kompressoren (21, 22, 23), die dazu ausgebildet ist, Kapazitätsdaten der Kompressoren (21, 22, 23) zu erhalten, und einen Mindestdrucks für die Druckluftanlage (9) zu erhalten;
- einen mit der Druckluftanlage (9) gekoppelten und mit der Hauptsteuerung (1) verbundenen Drucksensor (31), der dazu ausgebildet ist, einen Druckwert der Druckluftanlage (9) zu messen,
wobei die Hauptsteuerung (1) dazu ausgebildet ist, ein elektrisches Steuersignal an mindestens einen der Kompressoren (21, 22, 23) zu übermitteln, um den mindestens einen der Kompressoren (21, 22, 23) zu steuern, mit den Kompressoren eine Druckluft-Zuflussrate (Q_{Ia}, Q_{Ib}, Q_{Ic}) in die Druckluftanlage (9) zu liefern in Abhängigkeit von:
▪ einer Druckdifferenz zwischen dem gemessenen Druckwert und dem bestimmten Mindestdruck für die Druckluftanlage (9); und
▪ den bestimmten Kapazitätsdaten der Kompressoren (21, 22, 23),
**dadurch gekennzeichnet, dass** das System ferner umfasst:
- einen Durchflusssensor (41), der mit der Druckluftanlage (9) gekoppelt und mit der Hauptsteuerung (1) verbunden ist und dazu ausgebildet ist, eine Druckluft-Abflussrate der Druckluftanlage (9) zu messen;
wobei die Hauptsteuerung dazu ausgebildet ist, basierend auf der gemessenen Abflussrate (Qu) und dem gemessenen Druckwert die zu liefernde Zuflussrate (Q_{Ia}, Q_{Ib}, Q_{Ic}) zu bestimmen, und das elektrische Steuersignal an mindestens einen der Kompressoren zu übermitteln in Abhängigkeit von:
▪ der Druckdifferenz zwischen dem gemessenen Druckwert und dem bestimmten Mindestdruck für die Druckluftanlage (9),
▪ den erhaltenen Kapazitätsdaten der Kompressoren (21, 22, 23), und
▪ der gemessene Abflussrate (Qu).

12. System nach Anspruch 11, wobei die Hauptsteuerung ferner dazu ausgebildet ist, die initial erhaltenen Kapazitätsdaten basierend auf dem gemessenen Druckwert und der gemessenen Abflussrate (Qu) während des Betriebs der Druckluftanlage (9) anzupassen,
und das elektrische Steuersignal an mindestens einen der Kompressoren (21, 22, 23) zu übermitteln in Abhängigkeit von:
▪ der Druckdifferenz zwischen dem gemessenen Druckwert und dem bestimmten Mindestdruck für die Druckluftanlage (9),
▪ den angepassten Kapazitätsdaten der Kompressoren (21, 22, 23), und
▪ der gemessenen Abflussrate (Qu).

13. System nach Anspruch 11 oder 12, ferner umfassend:
- Leistungssensoren (5),
wobei die Hauptsteuerung (1) dazu ausgebildet ist, die möglichen Zuflussraten (Q_{Ia}, Q_{Ib}, Q_{Ic}), die durch die Kompressoren (21, 22, 23) einzeln oder in Kombination an die Druckluftanlage (9) geliefert werden sollen, basierend auf den Kapazitätsdaten der Kompressoren zu bestimmen, wobei die Hauptsteuerung (1) dazu ausgebildet ist, für jede der möglichen Zuflussraten (Q_{Ia}, Q_{Ib}, Q_{Ic}), die von den Kompressoren (21, 22, 23) einzeln oder in Kombination geliefert werden sollen, eine erwartete erforderliche Leistungsaufnahme zu bestimmen, und
wobei die Hauptsteuerung (1) ferner dazu ausgebildet ist, die erwartete erforderliche Leistungsaufnahme der jeweiligen Kompressoren (21, 22, 23) bei der jeweiligen Zuflussrate und dem gemessenen Druckwert in Abhängigkeit von der bestimmten Leistungsaufnahme der jeweiligen Kompressoren, die mit den Leistungssensoren (5) bestimmt wurde, zu aktualisieren.

14. System nach einem der Ansprüche 11-13, ferner umfassend:
- eine identische Steuerung (1, 11, 12, 13, 14, 15, 16) für jeden der Kompressoren (21, 22, 23) zur Steuerung der jeweiligen Kompressoren (21, 22, 23),
wobei die identischen Steuerungen (1, 11, 12, 13, 14, 15, 16) dazu ausgebildet sind, als Hauptsteuerung (1) festgelegt zu werden und Statusinformationen über die jeweils gesteuerten Kompressoren (21, 22, 23) an die Hauptsteuerung (1) zu übermitteln,
beispielsweise ferner umfassend:
- mindestens ein Kühl- und/oder Trocknungssystem (6) in der Druckluftanlage (9), das dazu ausgebildet ist, eine Zuflussrate der Druckluftanlage (9) zu kühlen und/oder zu trocknen, und/oder
mindestens einen Stickstoffgenerator (8), beispielsweise einen Druckwechselabsorber, in der Druckluftanlage (9), der dazu ausgebildet ist, eine Abflussrate der Druckluftanlage (9) an Stickstoff zu erzeugen, beispielsweise durch Druckwechselabsorption, und eine identische Steuerung (14, 15) für das mindestens eine Kühl- und/oder Trocknungssystem (6) zur Steuerung des jeweiligen Kühl- und/oder Trocknungssystems (6) und/oder eine identische Steuerung (17) für den mindestens einen Stickstoffgenerator (8) zur Steuerung des jeweiligen Stickstoffgenerators (8).

15. Verwendung des Systems nach einem der Ansprüche 11-14 zur Durchführung des Verfahrens nach einem der Ansprüche 1-10.

## Revendications

1. Procédé pour commander une pluralité de compresseurs (21, 22, 23) couplés à une installation à air comprimé (9), dans lequel le procédé comprend les étapes de :
- fourniture de :
o une pluralité de compresseurs (21, 22, 23),
o un contrôleur principal (1) pour commander les compresseurs (21, 22, 23), et
o un capteur de pression (31), couplé à l'installation à air comprimé (9) et connecté au contrôleur principal (1),
- obtention, dans le contrôleur principal (1), de données de capacité des compresseurs (21, 22, 23) ;
- obtention, dans le contrôleur principal (1), d'une pression minimum pour l'installation à air comprimé (9) ;
- mesure, à l'aide du capteur de pression (31), d'une valeur de pression de l'installation à air comprimé (9) ;
- transmission, à l'aide du contrôleur principal (1), d'un signal de commande électrique sur au moins l'un des compresseurs (21, 22, 23), afin de commander l'au moins un des compresseurs (21, 22, 23) pour alimenter un débit d'écoulement d'entrée d'air comprimé (Q_{Ia}, Q_{Ib}, Q_{Ic}) à l'intérieur de l'installation à air comprimé (9) à l'aide des compresseurs en fonction de :
▪ une différence de pression entre la valeur de pression mesurée et la pression minimum obtenue pour l'installation à air comprimé (9), et
▪ les données de capacité obtenues des compresseurs (21, 22, 23),
**caractérisé en ce que** le procédé comprend en outre les étapes de :
- fourniture d'un capteur d'écoulement (41), couplé à l'installation à air comprimé (9) et connecté au contrôleur principal (1) ;
- mesure, à l'aide du capteur d'écoulement (41), d'un débit d'écoulement de sortie d'air comprimé (Qu) de l'installation à air comprimé (9),
dans lequel le débit d'écoulement d'entrée (Q_{Ia}, Q_{Ib}, Q_{Ic}) à alimenter est déterminé sur la base du débit d'écoulement de sortie mesuré (Qu) et de la valeur de pression mesurée, et
dans lequel l'étape de transmission d'un signal de commande électrique à l'aide du contrôleur principal (1) sur au moins l'un des compresseurs (21, 22, 23) pour alimenter le débit d'écoulement d'entrée d'air comprimé déterminé (Q_{Ia}, Q_{Ib}, Q_{Ic}) est réalisée en outre en fonction de :
▪ la différence de pression entre la valeur de pression mesurée et la pression minimum obtenue pour l'installation à air comprimé (9),
▪ les données de capacité obtenues des compresseurs (21, 22, 23), et
▪ le débit d'écoulement de sortie mesuré (Qu).

2. Procédé selon la revendication 1, comprenant en outre l'étape de :
- réglage de données de capacité obtenues initialement sur la base de la valeur de pression mesurée et du débit d'écoulement de sortie mesuré (Qu) pendant le fonctionnement de l'installation à air comprimé (9),
dans lequel l'étape de transmission d'un signal de commande électrique à l'aide du contrôleur principal (1) sur au moins l'un des compresseurs (21, 22, 23) pour alimenter le débit d'écoulement d'entrée d'air comprimé déterminé (Q_{Ia}, Q_{Ib}, Q_{Ic}) est réalisée en fonction de :
▪ la différence de pression entre la valeur de pression mesurée et la pression minimum obtenue pour l'installation à air comprimé (9),
▪ les données de capacité réglées des compresseurs (21, 22, 23), et
▪ le débit d'écoulement de sortie mesuré (Qu).

3. Procédé selon la revendication 1 ou 2, dans lequel, avant l'étape de transmission d'un signal de commande électrique à l'aide du contrôleur principal (1) sur au moins l'un des compresseurs (21, 22, 23), les étapes suivantes sont réalisées :
- la détermination de débits d'écoulement d'entrée possibles (Q_{Ia}, Q_{Ib}, Q_{Ic}) à alimenter par les compresseurs (21, 22, 23) individuellement ou en combinaison, sur la base de données de capacité des compresseurs (21,22, 23),
dans lequel le contrôleur principal (1) détermine un signal de commande électrique requis et un facteur de rendement des compresseurs (21, 22, 23) pour chacun des débits d'écoulement d'entrée possibles déterminés (Q_{Ia}, Q_{Ib}, Q_{Ic}) à alimenter par les compresseurs (21, 22, 23) individuellement ou en combinaison ; et
- la sélection de l'un des débits d'écoulement d'entrée possibles déterminés (Q_{Ia}, Q_{Ib}, Q_{Ic}) à alimenter par les compresseurs (21, 22, 23) individuellement ou en combinaison afin de transmettre le signal de commande électrique requis correspondant sur au moins l'un des compresseurs (21, 22, 23) pour alimenter le débit d'écoulement d'entrée sélectionné (Q_{Ia}, Q_{Ib}, Q_{Ic}), en fonction de :
▪ le débit d'écoulement d'entrée déterminé (Q_{Ia}, Q_{Ib}, Q_{Ic}) à alimenter qui est déterminé sur la base de :
o le débit d'écoulement de sortie mesuré (Qu) de l'installation à air comprimé (9), et
o la différence de pression entre la valeur de pression mesurée et la pression minimum obtenue pour l'installation à air comprimé (9), et les facteurs de rendement déterminés pour chacun des débits d'écoulement d'entrée possibles déterminés (Q_{Ia}, Q_{Ib}, Q_{Ic}) à alimenter par les compresseurs (21, 22, 23) individuellement ou en combinaison, par exemple comprenant en outre l'étape de :
- obtention, dans le contrôleur principal (1), d'une déviation de débit d'écoulement maximum,
dans lequel, pendant l'étape de sélection de l'un des débits d'écoulement d'entrée possibles (Q_{Ia}, Q_{Ib}, Q_{Ic}) à alimenter par les compresseurs (21, 22, 23) individuellement ou en combinaison, le débit d'écoulement d'entrée (Q_{Ia}, Q_{Ib}, Q_{Ic}) à alimenter qui est sélectionné est celui pour lequel une différence avec le débit d'écoulement de sortie mesuré (Qu) de l'installation à air comprimé (9) est inférieure à la déviation de débit d'écoulement maximum obtenue et pour lequel le facteur de rendement déterminé est maximum.

4. Procédé selon la revendication 3, comprenant en outre les étapes de :
- fourniture, pour chacun des compresseurs (21, 22, 23), d'un capteur de puissance (5), configuré pour déterminer une consommation de puissance réelle du compresseur respectif (21, 22, 23) ;
- détermination, à l'aide des capteurs de puissance, des consommations de puissance réelles des compresseurs respectifs (21, 22, 23) ; et
- mise à jour des facteurs de rendement déterminés des compresseurs respectifs (21, 22, 23) au débit d'écoulement d'entrée respectif et à la valeur de pression mesurée, en fonction de la consommation de puissance réelle déterminée des compresseurs respectifs (21, 22, 23).

5. Procédé selon l'une quelconque des revendications précédentes, comprenant en outre les étapes de :
- obtention de temps de démarrage des compresseurs (21, 22, 23) ;
- détection d'une augmentation ou d'une diminution de la valeur de pression mesurée de l'installation à air comprimé (9) pendant une période prédéterminée,
- détermination d'une augmentation ou d'une diminution du débit d'écoulement de sortie (Qu) de l'installation à air comprimé (9) pendant la période prédéterminée ;
- calcul, dans l'éventualité d'une diminution de la valeur de pression mesurée, d'un temps attendu pour atteindre la pression minimum obtenue pour l'installation à air comprimé (9) avec l'augmentation ou la diminution du débit d'écoulement de sortie (Qu) de l'installation à air comprimé (9),
dans lequel l'étape de transmission d'un signal de commande électrique à l'aide du contrôleur principal (1) sur au moins l'un des compresseurs (21, 22, 23) est mise en oeuvre avant que le temps attendu calculé n'atteigne une valeur qui est inférieure au temps de démarrage obtenu de l'au moins un respectif des compresseurs (21, 22, 23),
par exemple comprenant en outre les étapes de :
- dans l'éventualité d'une augmentation détectée de la valeur de pression mesurée et d'une augmentation déterminée du débit d'écoulement de sortie (Qu) de l'installation à air comprimé (9) pendant la période prédéterminée, seulement la transmission d'un signal de commande électrique sur au moins l'un des compresseurs (21, 22, 23) à l'aide du contrôleur principal (1) lorsqu'une différence entre le débit d'écoulement d'entrée (Q_{Ia}, Q_{Ib}, Q_{Ic}) à alimenter par les compresseurs (21, 22, 23) individuellement ou en combinaison et le débit d'écoulement de sortie mesuré (Qu) de l'installation à air comprimé (9) pendant une période prédéterminée excède la déviation de débit d'écoulement maximum obtenue, et
- dans l'éventualité d'une diminution détectée de la valeur de pression mesurée et d'une diminution déterminée du débit d'écoulement de sortie de l'installation à air comprimé pendant la période prédéterminée, seulement la transmission d'un signal de commande électrique sur au moins l'un des compresseurs (21, 22, 23) à l'aide du contrôleur principal (1) lorsqu'une différence entre le débit d'écoulement d'entrée (Q_{Ia}, Q_{Ib}, Q_{Ic}) à alimenter par les compresseurs (21, 22, 23) individuellement ou en combinaison et le débit d'écoulement de sortie mesuré (Qu) de l'installation à air comprimé (9) pendant une période prédéterminée excède la déviation de débit d'écoulement maximum obtenue.

6. Procédé selon l'une quelconque des revendications précédentes, comprenant en outre les étapes de :
- fourniture de contrôleurs identiques (1, 11, 12, 13, 14, 15, 16) pour chacun des compresseurs (21, 22, 23) pour commander les compresseurs respectifs (21,22, 23) ;
- connexion de chacun des capteurs (31, 32, 41, 42) sur un contrôleur ou sur plusieurs des contrôleurs identiques (1, 11, 12, 13, 14, 15, 16),
- désignation de l'un des contrôleurs identiques (1, 11, 12, 13, 14, 15, 16) en tant que contrôleur principal (1),
dans lequel le contrôleur principal (1) transmet les signaux de commande électriques sur les autres contrôleurs (11, 12, 13, 14, 15, 16), et dans lequel les autres contrôleurs (11, 12, 13, 14, 15, 16) transmettent une information d'état concernant les compresseurs commandés respectifs (21, 22, 23) sur le contrôleur principal (1),
par exemple comprenant en outre les étapes de :
- fourniture de :
o au moins un système de refroidissement et/ou de séchage (6) dans l'installation à air comprimé (9),
o un contrôleur identique (14, 15) pour l'au moins un système de refroidissement et/ou de séchage (6) pour commander le système de refroidissement et/ou de séchage respectif (6) ;
- transmission, à l'aide du contrôleur principal (1), d'un signal de commande électrique sur au moins l'un de l'au moins un système de refroidissement et/ou de séchage (6), afin de refroidir et/ou de sécher un débit d'écoulement d'entrée de l'air comprimé à l'intérieur de l'installation à air comprimé (9) à l'aide du système de refroidissement et/ou de séchage respectif (6),
et/ou comprenant en outre les étapes de :
- fourniture de :
o au moins un générateur d'azote (8), tel qu'un dispositif d'absorption par variation de pression, dans l'installation à air comprimé (9),
o de contrôleurs identiques (17) pour l'au moins un générateur d'azote (8) pour commander le générateur d'azote respectif (8) ;
- transmission, à l'aide du contrôleur principal (1), d'un signal de commande électrique sur au moins l'un de l'au moins un générateur d'azote (8) afin de, à l'aide du générateur d'azote respectif (8), générer un débit d'écoulement de sortie de l'installation à air comprimé (9) en azote, par exemple en utilisant l'absorption par variation de pression.

7. Procédé selon l'une quelconque des revendications précédentes, comprenant en outre les étapes de :
- fourniture de :
o au moins une ouverture d'écoulement d'entrée ou d'écoulement de sortie additionnelle (93) au travers de laquelle un débit d'écoulement d'entrée de l'installation à air comprimé (9) ou le débit d'écoulement de sortie d'air comprimé peut s'écouler à l'intérieur de, respectivement hors de, l'installation à air comprimé (9),
o des capteurs d'écoulement additionnels (42) au niveau de chacune de l'au moins une ouverture d'écoulement d'entrée ou d'écoulement de sortie additionnelle (93) ;
- mesure, à l'aide des capteurs d'écoulement additionnels (42), de débits d'écoulement d'air comprimé respectifs à l'intérieur de ou hors de l'au moins une ouverture d'écoulement d'entrée ou d'écoulement de sortie additionnelle (93),
dans lequel l'étape de transmission d'un signal de commande électrique à l'aide du contrôleur principal (1) sur au moins l'un des compresseurs (21, 22, 23) est réalisée en outre en fonction des débits d'écoulement d'air comprimé respectifs (Q_{Ia}, Q_{Ib}, Q_{Ic}) à l'intérieur de ou hors de l'installation à air comprimé (9) au travers de l'au moins une ouverture d'écoulement d'entrée ou d'écoulement de sortie additionnelle (93).

8. Procédé selon les revendications 6 et 7, dans lequel les autres contrôleurs (11, 12, 13, 16, 17) sont connectés aux capteurs d'écoulement additionnels respectifs (42),
dans lequel les autres contrôleurs (11, 12, 13, 16, 17) transmettent le débit d'écoulement de sortie d'air comprimé (Qu) de l'installation à air comprimé (9) au travers de l'au moins une ouverture d'écoulement de sortie additionnelle (93) sur le contrôleur principal (1).

9. Procédé selon l'une quelconque des revendications précédentes, comprenant en outre les étapes de :
- agencement du capteur de pression (31) à proximité d'un premier tampon d'air comprimé (92) de l'installation à air comprimé (9) ;
- fourniture de :
o de capteurs de pression additionnels (32) à proximité de chacun des tampons d'air comprimé restants de l'installation à air comprimé (9) ;
- mesure, à l'aide des capteurs de pression additionnels (32), de valeurs de pression additionnelles de l'installation à air comprimé (9),
dans lequel l'étape de transmission d'un signal de commande électrique à l'aide du contrôleur principal (1) sur au moins l'un des compresseurs (21, 22, 23) est réalisée en outre en fonction des différences de pression respectives entre les valeurs de pression additionnelles mesurées respectives de l'installation à air comprimé (9) et la pression minimum obtenue pour l'installation à air comprimé (9).

10. Procédé selon les revendications 6 et 9, dans lequel les autres contrôleurs (11, 12, 13, 16, 17) sont connectés aux capteurs de pression additionnels (32), dans lequel les autres contrôleurs (11, 12, 13, 16, 17) transmettent les valeurs de pression additionnelles de l'installation à air comprimé (9) qui sont mesurées par les capteurs de pression additionnels (32) au contrôleur principal (1).

11. Système pour commander une pluralité de compresseurs (21, 22, 23) couplés à une installation à air comprimé (9), comprenant :
- un contrôleur principal (1) pour commander les compresseurs (21, 22, 23), configuré pour obtenir des données de capacité des compresseurs (21, 22, 23) et pour obtenir une pression minimum pour l'installation à air comprimé (9) ;
- un capteur de pression (31), couplé à l'installation à air comprimé (9) et connecté au contrôleur principal (1), configuré pour mesurer une valeur de pression de l'installation à air comprimé (9),
dans lequel le contrôleur principal (1) est configuré pour transmettre un signal de commande électrique sur au moins l'un des compresseurs (21, 22, 23) afin de commander l'au moins un des compresseurs (21, 22, 23) pour alimenter un débit d'écoulement d'entrée d'air comprimé (Q_{Ia}, Q_{Ib}, Q_{Ic}) à l'intérieur de l'installation à air comprimé (9) en fonction de :
▪ une différence de pression entre la valeur de pression mesurée et la pression minimum obtenue pour l'installation à air comprimé (9) ; et
▪ les données de capacité obtenues des compresseurs (21, 22, 23),
**caractérisé en ce que** le système comprend en outre :
- un capteur d'écoulement (41), couplé à l'installation à air comprimé (9) et connecté au contrôleur principal (1), configuré pour mesurer un débit d'écoulement de sortie d'air comprimé de l'installation à air comprimé (9),
dans lequel le contrôleur principal est configuré pour déterminer le débit d'écoulement d'entrée (Q_{Ia}, Q_{Ib}, Q_{Ic}) à alimenter sur la base du débit d'écoulement de sortie mesuré (Qu) et de la valeur de pression mesurée, et pour transmettre le signal de commande électrique sur au moins l'un des compresseurs en fonction de :
▪ la différence de pression entre la valeur de pression mesurée et la pression minimum obtenue pour l'installation à air comprimé (9),
▪ les données de capacité obtenues des compresseurs (21, 22, 23), et
▪ le débit d'écoulement de sortie mesuré (Qu).

12. Système selon la revendication 11, dans lequel le contrôleur principal est en outre configuré pour régler les données de capacité obtenues initialement sur la base de la valeur de pression mesurée et du débit d'écoulement de sortie mesuré (Qu) pendant le fonctionnement de l'installation à air comprimé (9), et pour transmettre le signal de commande électrique sur au moins l'un des compresseurs (21, 22, 23) en fonction de :
▪ la différence de pression entre la valeur de pression mesurée et la pression minimum obtenue pour l'installation à air comprimé (9),
▪ les données de capacité réglées des compresseurs (21, 22, 23), et
▪ le débit d'écoulement de sortie mesuré (Qu).

13. Système selon la revendication 11 ou 12, comprenant en outre :
- des capteurs de puissance (5),
dans lequel le contrôleur principal (1) est configuré pour déterminer les débits d'écoulement d'entrée possibles (Q_{Ia}, Q_{Ib}, Q_{Ic}) à alimenter à l'intérieur de l'installation à air comprimé (9) par les compresseurs (21, 22, 23) individuellement ou en combinaison, sur la base des données de capacité des compresseurs, dans lequel le contrôleur principal (1) est configuré pour déterminer une consommation de puissance requise attendue pour chacun des débits d'écoulement d'entrée possibles (Q_{Ia}, Q_{Ib}, Q_{Ic}) à alimenter par les compresseurs (21, 22, 23) individuellement ou en combinaison, et
dans lequel le contrôleur principal (1) est en outre configuré pour mettre à jour la consommation de puissance requise attendue des compresseurs respectifs (21, 22, 23) au débit d'écoulement d'entrée respectif et à la valeur de pression mesurée, en fonction de la puissance consommée déterminée des compresseurs respectifs qui est déterminée à l'aide des capteurs de puissance (5).

14. Système selon l'une quelconque des revendications 11 à 13, comprenant en outre :
- un contrôleur identique (1, 11, 12, 13, 14, 15, 16) pour chacun des compresseurs (21, 22, 23) pour commander les compresseurs respectifs (21, 22, 23),
dans lequel les contrôleurs identiques (1, 11, 12, 13, 14, 15, 16) sont configurés pour être désignés en tant que contrôleur principal (1) et pour transmettre une information d'état concernant les compresseurs commandés respectifs (21, 22, 23) sur le contrôleur principal (1),
par exemple comprenant en outre :
- au moins un système de refroidissement et/ou de séchage (6) dans l'installation à air comprimé (9) configuré pour refroidir et/ou sécher un débit d'écoulement d'entrée de l'installation à air comprimé (9), et/ou au moins un générateur d'azote (8), tel qu'un dispositif d'absorption par variation de pression, dans l'installation à air comprimé (9), configuré pour générer un débit d'écoulement de sortie de l'installation à air comprimé (9) en azote, par exemple en utilisant une absorption par variation de pression, et un contrôleur identique (14, 15) pour l'au moins un système de refroidissement et/ou de séchage (6) pour commander le système de refroidissement et/ou de séchage respectif (6) et/ou un contrôleur identique (17) pour l'au moins un générateur d'azote (8) pour commander le générateur d'azote respectif (8).

15. Utilisation du système selon l'une quelconque des revendications 11 à 14 pour réaliser le procédé selon l'une quelconque des revendications 1 à 10.
